(19) Europäisches Patentamt European Patent Office Office européen des brevets

(11) **EP 3 535 892 B1**

(12) **EUROPEAN PATENT SPECIFICATION**

(45) Date of publication and mention of the grant of the patent:
**17.03.2021 Bulletin 2021/11**

(21) Application number: **17804081.2**

(22) Date of filing: **03.11.2017**

(51) Int Cl.:
*H04L 1/18* (2006.01)    *H04W 72/04* (2009.01)
*H04W 48/08* (2009.01)    *H04L 5/00* (2006.01)
*H04L 1/16* (2006.01)    *H04L 5/14* (2006.01)
*H04W 48/16* (2009.01)

(86) International application number:
**PCT/EP2017/078173**

(87) International publication number:
**WO 2018/083229 (11.05.2018 Gazette 2018/19)**

(54) **COMMUNICATION WITH SHORT TTI**

KOMMUNIKATION MIT SHORT-TTI

COMMUNICATION AVEC TTI COURT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.11.2016 US 201662417914 P**

(43) Date of publication of application:
**11.09.2019 Bulletin 2019/37**

(60) Divisional application:
**21156650.0**

(73) Proprietor: **Telefonaktiebolaget LM Ericsson (PUBL)**
**164 83 Stockholm (SE)**

(72) Inventors:
• **KAZMI, Muhammad**
  **17464 Sundbyberg (SE)**
• **RAHMAN, Imadur**
  **19146 Sollentuna (SE)**
• **AXMON, Joakim**
  **21631 Limhamn (SE)**
• **CALLENDER, Christopher Cleish**
  **Kinross KY13 0LW (GB)**

(74) Representative: **Ericsson Patent Development**
**Torshamnsgatan 21-23**
**164 80 Stockholm (SE)**

(56) References cited:
**WO-A1-2013/172757    US-A1- 2016 262 137**

• **ERICSSON: "Draft CR for introduction of requirements for sTTI and reduced processing time", 3GPP DRAFT; R4-1702894 STT-PROC-REDUCTION-CR-DRAFT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG4, no. Spokane, United States; 20170403 - 20170407 3 April 2017 (2017-04-03), XP051246148, Retrieved from the Internet: URL:http://www.3gpp.org/ftp/Meetings_3GPP_ SYNC/RAN4/Docs/ [retrieved on 2017-04-03]**
• **"RAN4#84 Meeting report", 3GPP DRAFT; R4-1710101, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG4, no. Dubrovnik, Croatia; 20171009 - 20171013 4 October 2017 (2017-10-04), XP051373797, Retrieved from the Internet: URL:http://www.3gpp.org/tsg_ran/WG4_Radio/ TSGR4_84/Report/R4-1710101.doc [retrieved on 2017-10-04]**

**Description**

TECHNICAL FIELD

Certain embodiments of the present disclosure relate, in general, to wireless communications and, more particularly, to serving cell performance for system information (SI) acquisition with a short transmission time interval (TTI).

INTRODUCTION

US 2016/262137 describes a method performed in a wireless device located in a first cell operated by a network node of a wireless communication system. The method comprises acquiring (510) system information of a second cell using at least one autonomous gap during a time period. The wireless device is configured with a flexible subframe allocation scheme in the first cell during at least a part of the time period.

WO 2013/172757 describes a UE (30) configured in multi-carrier with at least one secondary cell (SCell) which may send feedback signaling to the network when measurement gaps are active, which prevent the UE (30) from communicating on the primary cell (PCell).

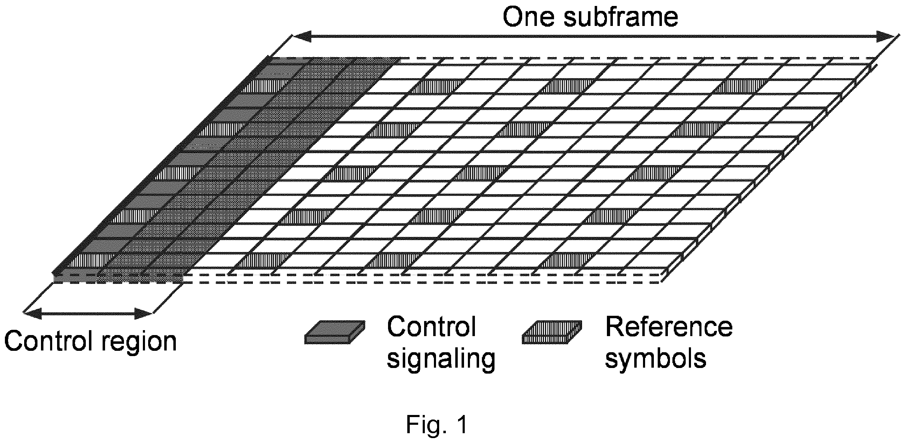

Third Generation Partnership Project (3GPP) Long Term Evolution (LTE) uses Orthogonal Frequency Division Multiplexing (OFDM) in the downlink, where each downlink symbol may be referred to as an OFDM symbol, and Discrete Fourier Transform (DFT)-spread OFDM in the uplink, where each uplink symbol may be referred to as a single carrier-frequency-division multiplexing (SC-FDMA) symbol. The basic LTE downlink physical resource comprises a time-frequency grid as illustrated in FIGURE 1.

FIGURE 1 illustrates an example downlink radio subframe. The horizontal axis represents time and the other axis represents frequency. Each resource element corresponds to one OFDM subcarrier during one OFDM symbol interval. In the time domain, LTE downlink transmissions may be organized into radio frames.

FIGURE 2 illustrates an example radio frame. Each radio frame is 10 ms and consists of ten equally-sized subframes of length Tsubframe = 1 ms. For normal cyclic prefix, one subframe consists of 14 OFDM symbols. The duration of each symbol is approximately 71.4 $\mu$s.

Users are allocated a specific number of subcarriers for a predetermined amount of time. These are referred to as physical resource blocks (PRBs). PRBs thus have both a time and frequency dimension. A resource block corresponds to one slot (0.5 ms) in the time domain and 12 contiguous subcarriers in the frequency domain. A pair of two adjacent resource blocks

in time direction (1.0 ms) is known as a resource block pair. The time interval may be referred to as transmission time interval (TTI).

Downlink transmissions are dynamically scheduled (i.e., in each subframe a base station transmits control information about to which terminals data is transmitted and upon which resource blocks the data is transmitted, for the current downlink subframe). The control signaling is typically transmitted in the first 1, 2, 3 or 4 OFDM symbols in each subframe and the number n=1,2,3 or 4 is known as the Control Format Indicator (CFI) indicated by the physical CFI channel (PCFICH) transmitted in the first symbol of the control region. The control region also contains physical downlink control channels (PDCCH) and possibly also physical HARQ indication channels (PHICH) carrying ACK/NACK for the uplink transmission.

The downlink subframe also contains common reference symbols (CRS), which are known to the receiver and used for coherent demodulation of, for example, control information. A downlink system with CFI=3 OFDM symbols as control is illustrated in FIGURE 1. In a Rel-8 TTI, one such portion of the downlink transmission is referred to as one TTI.

Packet data latency is one of the performance metrics that vendors, operators and also end-users (via speed test applications) regularly measure. Latency measurements are done in all phases of a radio access network system lifetime, such as when verifying a new software release or system component, when deploying a system, and when the system is in commercial operation.

Shorter latency than previous generations of 3GPP radio access technologies (RATs) is one performance metric that guided the design of LTE. LTE is recognized by end-users to provide faster access to internet and lower data latencies than previous generations of mobile radio technologies.

Packet data latency is important not only for the perceived responsiveness of the system, it is also a parameter that indirectly influences the throughput of the system. HTTP/TCP is the dominating application and transport layer protocol suite used on the internet today. According to HTTP Archive (see httparchive.org under trends) the typical size of HTTP based transactions over the internet are in the range of a few 10s of Kbyte up to 1 Mbyte. In this size range, the TCP slow start period is a significant part of the total transport period of the packet stream. During TCP slow start the performance is latency limited. Thus, improved latency can improve the average throughput for this type of TCP based data transactions.

Latency reductions may improve radio resource efficiency. Lower packet data latency may increase the number of transmissions possible within a certain delay bound; thus higher Block Error Rate (BLER) targets may be used for the data transmissions freeing up radio resources and potentially improving the capacity of the system.

One area to address when it comes to packet latency reductions is the reduction of transport time of data and control signaling by modifying the TTT length. In LTE release 8, a TTI corresponds to one subframe (SF) of length 1 millisecond. One such 1 ms TTI is constructed using 14 OFDM or SC-FDMA symbols in the case of normal cyclic prefix and 12 OFDM or SC-FDMA symbols in the case of extended cyclic prefix. LTE release 13 may specify transmissions with TTIs that are much shorter than the LTE release 8 TTI. The shorter TTIs may have any duration in time and comprise resources on a number of OFDM or SC-FDMA symbols within a 1 ms SF. As one example, the duration of the short TTI may be 0.5 ms (i.e., seven OFDM or SC-FDMA symbols for the case with normal cyclic prefix). As another example, the duration of the short TTI may be 2 symbols.

As seen in FIGURE 1, the TTI length consists of 14 OFDM symbols. In case of shortened TTI, the TTI length can be reduced to 2-OFDM symbols, 4-OFDM symbols or 7-OFDM symbols. These are denoted as: 2-OS sTTI, 4-OS sTTI, 7-OS sTTI, respectively. OFDM symbol herein can also be SC-FDMA symbol or any type of symbol.

The shortened TTI can be used in different values in different direction, such as downlink and uplink. For example: a downlink may use 2-OS sTTI, while uplink may use 4-OS sTTI in the same cell.

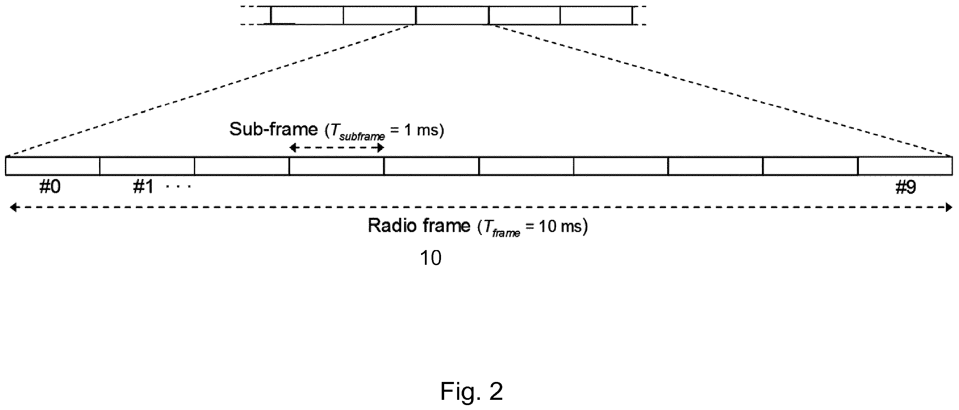

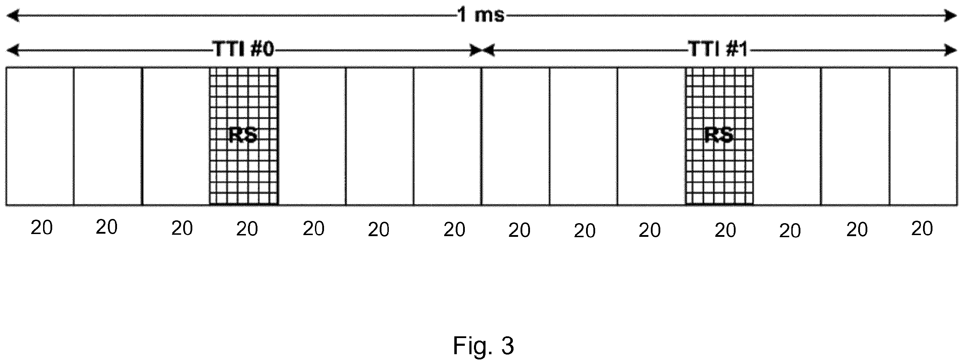

Different frame structures, such as FS1, FS2 and FS3, may use different length sTTI. The time domain structure in FIGURE 2 relates to FS1. 2-OS, 4-OS and 7-OS TTI are usable for FS1. For FS2 which is used for TDD, 7-OS sTTI is one of the shortened TTI modes. Some example TTI durations are illustrated in FIGURES 3-6.

For example, particular networks may use a 7-symbol TTI in downlink. FIGURE 3 illustrates an example of 7-symbol TTI. For 7-symbol TTI, the sTTI structure in FIGURE 3 is supported for uplink.

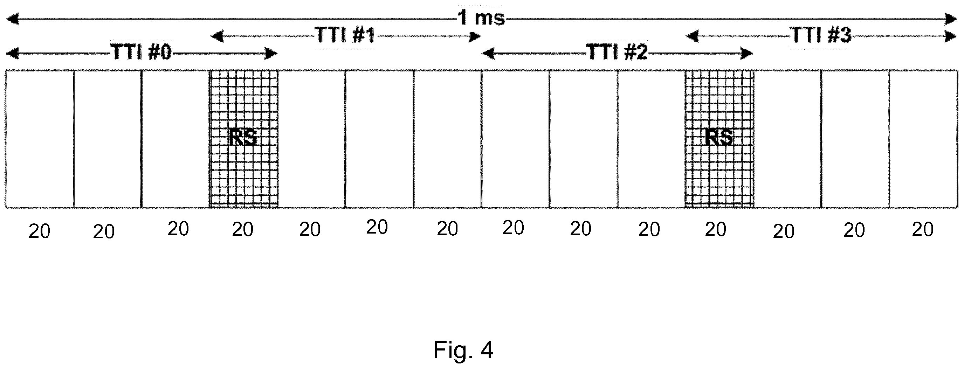

Particular networks may use a 4-symbol TTI in downlink. FIGURE 4 illustrates an example of 4-symbol TTI. If 4-symbol uplink sTTI is supported, the sTTI structure in FIGURE 4 is adopted.

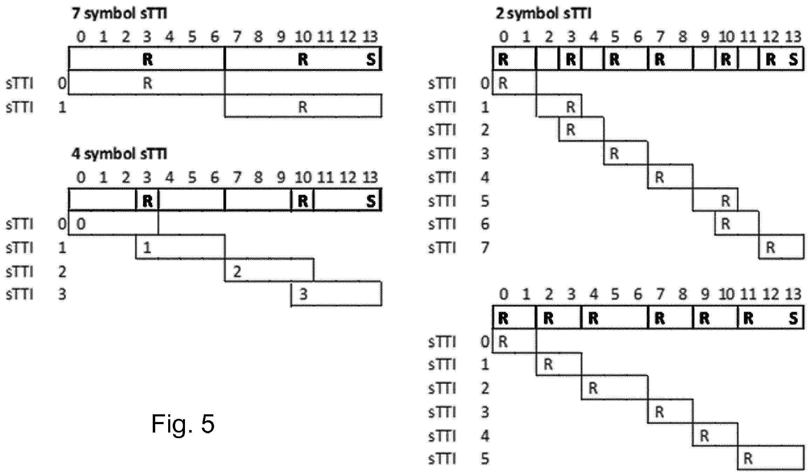

FIGURE 5 illustrates examples of short TTI for uplink. The example in FIGURE 5 shows various TTI lengths. The 2-OS sTTI can have one of the two illustrated options.

The following characteristics apply to uplink sTTI. Three different TTI lengths may be used for uplink. Of the three, different patterns are possible for 2-OS TTI. A fast uplink grant may include dynamic indication of TTI length and/or dynamic indication of a demodulation reference signal (DMRS) position. For some TTI patterns, shared DMRS is possible between UEs. For some UEs, this also means that the UE will send DMRS for two TTIs when the UE is scheduled across neighboring TTIs.

A wireless device, such as a UE, may acquire system information (SI) using autonomous gaps. In E-UTRAN the serving cell can request the UE to acquire the cell global identifier (CGI) of a cell, which uniquely identifies the cell. To acquire the CGI of the cell, the UE reads at least part of the system information (SI) including master information block (MIB) and the relevant system information block (SIB) of that cell, as described later. The reading of SI for the acquisition of CGI is carried out during measurement gaps which are autonomously created by the UE (i.e., gaps are not configured by the network node, but left for the UE to create). The CGI or SI or ECGI is also considered to be a UE measurement, which the UE may also report to the network node.

In LTE, a UE reads the MIB and SIB1 of the target cell E-UTRAN cell to acquire its CGI (i.e., ECGI when the target cell is E-UTRAN intra- or inter-frequency). The MIB includes a limited number of essential and frequently transmitted parameters that are needed to acquire other information from the cell, and is transmitted on BCH. In particular the following information is currently included in MIB: downlink bandwidth, PHICH configuration, and system frame number (SFN).

The MIB is transmitted periodically with a periodicity of 40 ms and repetitions made within 40 ms. The first transmission of the MIB is scheduled in subframe #0 of radio frames for which the SFN mod 4 = 0, and repetitions are scheduled in subframe #0 of all other radio frames.

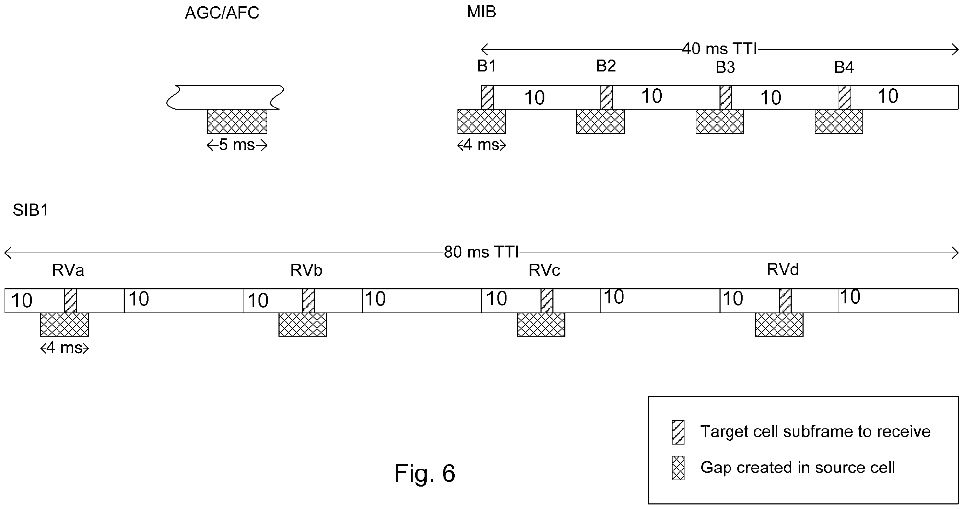

In LTE, the SIB1 contains at least the following information: PLMN identity, cell identity, CSG identity and indication, frequency band indicator, SI-window length, scheduling info for other SIBs, etc. The LTE SIB1, as well as other SIB messages, is transmitted on a physical channel, such as PDSCH. An example of MIB and SIB1 acquisition by using autonomous gaps created by the UE is shown in FIGURE 6.

FIGURE 6 illustrates acquisition of E-UTRA FDD MIB and SIB1. The SIB1 is transmitted with a periodicity of 80 ms and repetitions made within 80 ms. The first transmission of SystemInformationBlockType1 is scheduled in subframe #5 of radio frames for which the SFN mod 8 = 0, and repetitions are scheduled in subframe #5 of all other radio frames for which SFN mod 2 = 0.

A problem with the current specifications is that the UE supports only one TTI (i.e., 1 ms). The UE requirements for SI acquisition of target cell are defined based on only 1 ms of TTI. The requirements are defined in terms of SI acquisition delay and number of ACK/NACK transmitted by the UE in the serving cell. This is to ensure that the UE does not create unnecessary autonomous gaps when it acquires the SI of the target cell. The UE supporting shorter TTI may lead to significant performance degradation if the same requirements are applied.

SUMMARY

The embodiments described herein include several methods in the UE and the network node. In general, a method in a UE may comprise the following steps:

Step-1: Obtaining a request to acquire a system information (SI) of a second cell (cell2);
Step-2: Acquiring the SI of cell2 in autonomous gaps during a time period (T0);
Step-3: Transmitting a first minimum number (N1) of uplink feedback signals in a first cell (cell1) in response to receiving downlink data in cell1 if a first TTI (TTI1) is used by the UE in cell1 during T0, and a second minimum number (N2) of uplink feedback signals in cell1 in response to receiving downlink data in cell1 if a second TTI (TTI2) is used by the UE in cell1 during T0;
Step-4: Using the results of the acquired SI of cell2 for performing one or more operational tasks (e.g., determining cell global identity (CGI), transmitting the results to another node, cell change etc.).

In general, a method in a network node may comprise the following steps:

Step-1: Configuring a UE to acquire a system information (SI) of a second cell (cell2) using autonomous gaps during time period (T0);
Step-2: Determining a first minimum number (N1) of uplink feedback signals that the UE may transmit in a first cell (cell1) in response to receiving downlink data in cell1 if a first TTI (TTI1) is used by the UE in cell1 during T0, or a second minimum number (N2) of uplink feedback signals that the UE may transmit in cell1 in response to receiving downlink data in cell1 if a second TTI (TTI2) is used by the UE in cell1 during T0;
Step 3: Transmitting downlink data to the UE during T0 in cell1;.
Step-4: Receiving N1 uplink feedback signals from the UE in cell1 response to transmitting downlink data in cell1 if TTI1 is used by the UE in cell1 during T0, or N2 uplink feedback from the UE in cell1 in response to transmitting downlink data in cell1 if TTI2 is used by the UE in cell1 during T0;
Step-5: Using the results of the number of received uplink feedback signals from the UE in cell1 and/or results of the acquired SI of cell1 for performing one or more operational tasks.

According to some embodiments, a method for use in a wireless device in communication with a first cell for acquiring system information (SI) of a second cell, the first cell operable to use two or more transmission time intervals (TTIs), the method comprising: obtaining a request to acquire SI of the second cell; obtaining the SI of the second cell during a time period (T0); and determining a TTI length used for wireless communication with the wireless device in the first cell. In response to receiving downlink data from the first cell during time T0: when the determined TTI length equals a first TTI value (TTI1), the method further comprises transmitting a first minimum number (N1) of uplink feedback signals in the uplink of the first cell during T0; and when the determined TTI length equals a second TTI value (TTI2), the method further comprises transmitting a second minimum number (N2) of uplink feedback signals in the uplink of the first cell during T0. TTI1 is a shorter duration than TTI2 and N1 is greater than N2.

In particular embodiments, determining the TTI length comprises determining one of an uplink TTI length used in the first cell and a downlink TTI length used in the first cell. Obtaining the SI of the second cell may include measuring signals in a number of measurement gaps. The method may further comprise, when the wireless device is not able to transmit N1 or N2 uplink feedback signals during T0, reducing the number of measurement gaps or increasing T0.

In particular embodiments, measurement gaps comprise autonomous gaps created by the wireless device in at least the first cell during time T0. For example, TTI1 may be shorter than 1 ms and N1 greater than 60.

In particular embodiments, N1 and N2 are dependent on a time division duplex (TDD) uplink/downlink subframe configuration of the first cell. The uplink feedback signals may include hybrid automatic repeat request (HARQ) acknowledgment (ACK) and negative acknowledgement (NACK) signals.

According to some embodiments, a wireless device is in communication with a first cell for acquiring SI of a second cell. The first cell is operable to use two or more TTIs. The wireless device comprises processing circuitry operable to: obtain a request to acquire SI of the second cell; obtain the SI of the second cell during a time period (T0); and determine a TTI length used for wireless communication with the wireless device in the first cell. In response to receiving downlink data from the first cell during time T0: when the determined TTI length equals a first TTI value (TTI1), the processing circuitry is operable to transmit a first minimum number (N1) of uplink feedback signals in the uplink of the first cell during T0; and when the determined TTI length equals a second TTI value (TTI2), the processing circuitry is operable to transmit a second minimum number (N2) of uplink feedback signals in the uplink of the first cell during T0. TTI1 is a shorter duration than TTI2 and N1 is greater than N2.

In particular embodiments, the processing circuitry is operable to determine the TTI length by determining one of an uplink TTI length used in the first cell and a downlink TTI length used in the first cell. The processing circuitry may be operable to obtain the SI of the second cell by measuring signals in a number of measurement gaps. The processing circuitry is further operable to, when the wireless device is not able to transmit N1 or N2 uplink feedback signals during T0, reduce the number of measurement gaps or increase T0.

In particular embodiments, measurement gaps comprise autonomous gaps created by the wireless device in at least the first cell during time T0. For example, TTI1 may be shorter than 1 ms and N1 greater than 60.

In particular embodiments, N1 and N2 are dependent on a TDD uplink/downlink subframe configuration of the first cell. The uplink feedback signals may include HARQ ACK/NACK signals.

According to some embodiments, a method for use in a network node of a first cell for configuring a wireless device to acquire SI of a second cell, the first cell operable to use two or more TTIs, the method comprises: configuring the wireless device to acquire SI of the second cell during a time period (T0); determining a TTI length used for wireless communication with the wireless device in the first cell; and transmitting a continuous allocation of downlink data to the wireless device during time T0. When the determined TTI length equals a first TTI value (TTI1), the method further comprises receiving a first minimum number (N1) of uplink feedback signals from the wireless device during T0; and when the determined TTI length equals a second TTI value (TTI2), the method further comprises receiving a second minimum number (N2) of uplink feedback signals from the wireless device during T0. TTI1 comprises a shorter duration than TTI2 and N1 is greater than N2.

In particular embodiments, determining the TTI length comprises determining one of an uplink TTI length used in the first cell and a downlink TTI length used in the first cell. In some embodiments, when the network node does not receive N1 or N2 uplink feedback signals during T0, the method includes increasing T0.

For example, TTI1 is shorter than 1 ms and N1 is greater than 60.

In particular embodiments, N1 and N2 are dependent on a TDD uplink/downlink subframe configuration of the first cell.

According to some embodiments, a network node of a first cell is capable of configuring a wireless device to SI of a second cell. The first cell is operable to use two or more TTIs. The network node comprises processing circuitry operable to: configure the wireless device to acquire SI of the second cell during a time period (T0); determine a TTI length used for wireless communication with the wireless device in the first cell; and transmit a continuous allocation of downlink data to the wireless device during time T0. When the determined TTI length equals a first TTI value (TTI1), the processing circuitry is operable to receive a first minimum number (N1) of uplink feedback signals from the wireless device during T0; and when the determined TTI length equals a second TTI value (TTI2), receive a second minimum number (N2) of uplink feedback signals from the wireless device during T0. TTI1 comprises a shorter duration than TTI2 and N1 is greater than N2.

In particular embodiments, the processor is operable to determine the TTI length by determining one of an uplink TTI length used in the first cell and a downlink TTI length used in the first cell. The processor may be further operable to, when the network node does not receive N1 or N2 uplink feedback signals during T0, increase T0.

For example, TTI1 is shorter than 1 ms and N1 is greater than 60.

In particular embodiments, N1 and N2 are dependent on a TDD uplink/downlink subframe configuration of the first cell. The uplink feedback signals may include HARQ ACK/NACK signals.

Certain embodiments of the present disclosure may provide one or more technical advantages. For example, a particular advantage of some embodiments is that UE behavior with respect to serving cell performance when it acquires the SI of a target cell is well defined. Another advantage is that the scheduling performance of data to the UE in the serving cell is enhanced. This is because the scheduling grants can be utilized more efficiently. Also, SI acquisition performance can be at least maintained or even enhanced, even if UE uses different TTIs in the uplink and downlink of its serving cell. Certain embodiments may have none, some, or all of the recited advantages.

BRIEF DESCRIPTION OF THE DRAWINGS

For a more complete understanding of the embodiments and their features and advantages, reference is now made to the following description, taken in conjunction with the accompanying drawings, in which:

FIGURE 1 illustrates an example downlink radio subframe;
FIGURE 2 illustrates an example radio frame;
FIGURE 3 illustrates an example of 7-symbol TTI;
FIGURE 4 illustrates an example of 4-symbol TTI;
FIGURE 5 illustrates examples of short TTI for uplink;
FIGURE 6 illustrates acquisition of E-UTRA FDD MIB and SIB1;

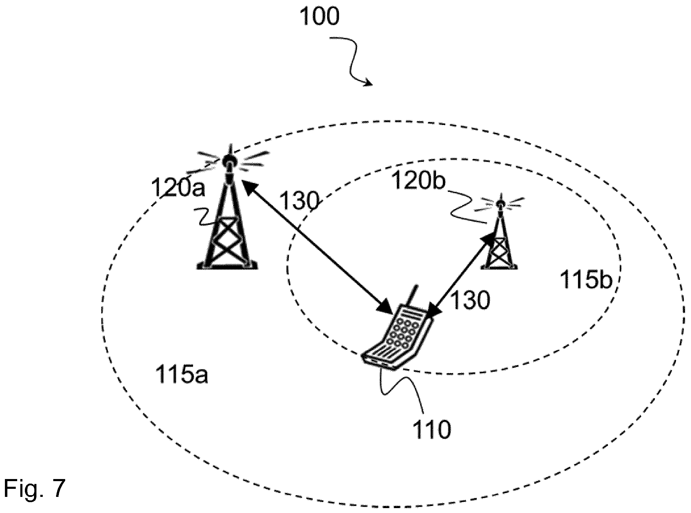

FIGURE 7 illustrates an example wireless network, according to a particular embodiment;

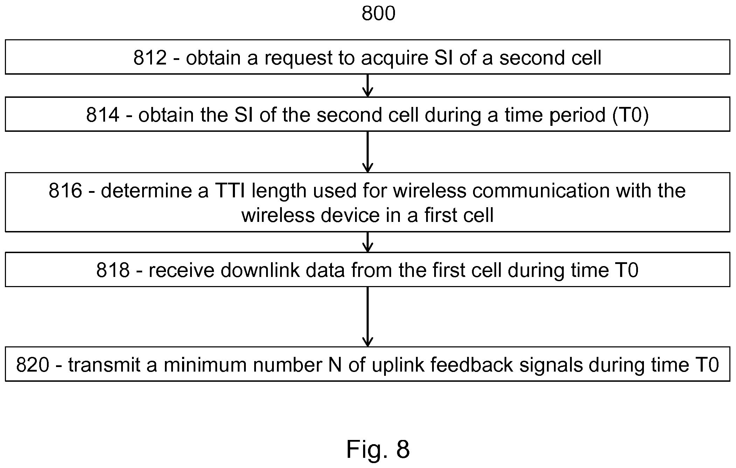

FIGURE 8 is a flow diagram of an example method in a wireless device, according to some embodiments;

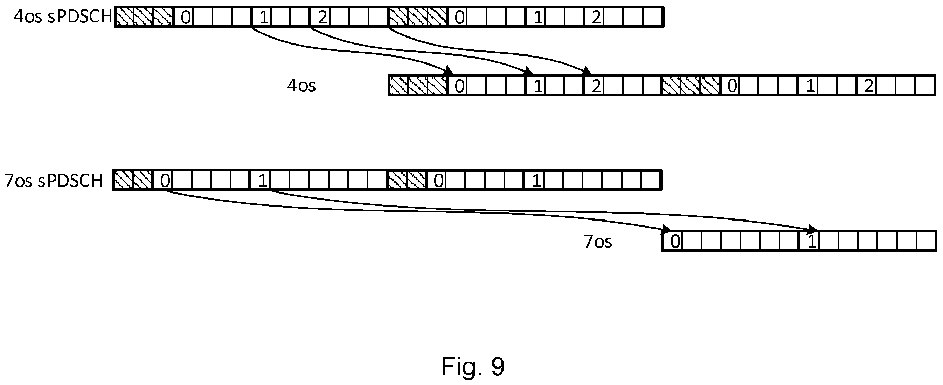

FIGURE 9 illustrates example HARQ feedback for downlink/uplink configuration for 4os/4os and 7os/7os, according to some embodiments;

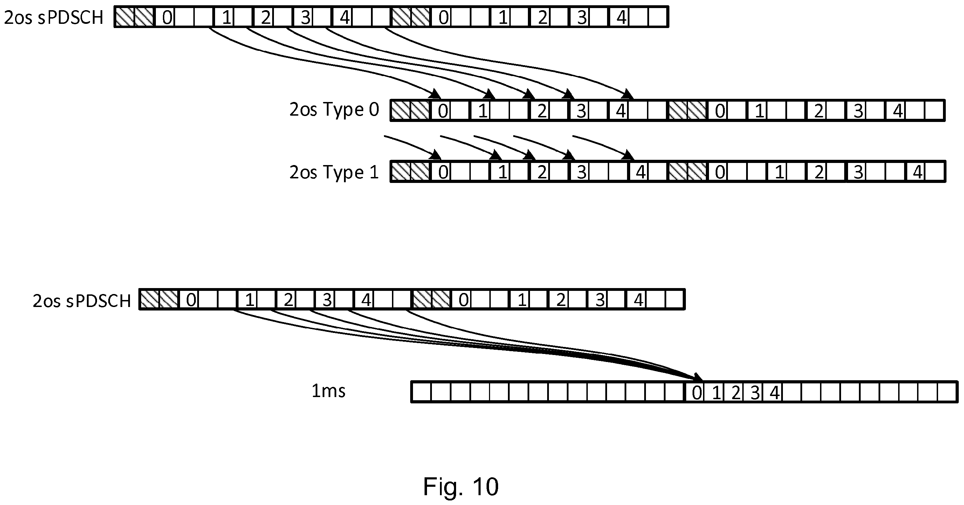

FIGURE 10 illustrates example HARQ feedback for downlink/uplink configuration for 2os/2os and 2os/1ms, according to some embodiments;

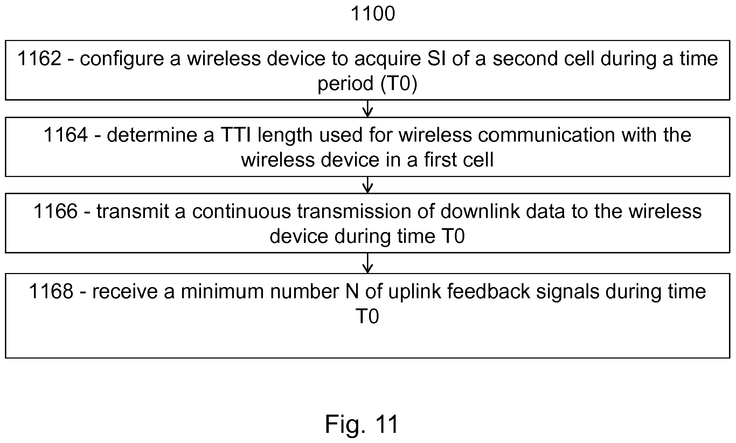

FIGURE 11 is a flow diagram of an example method in a network node, according to some embodiments;

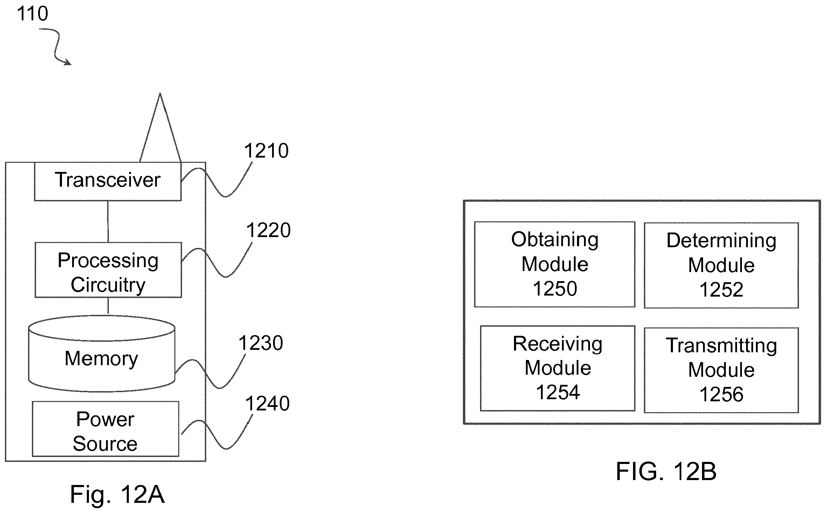

FIGURE 12A is a block diagram illustrating an example embodiment of a wireless device;

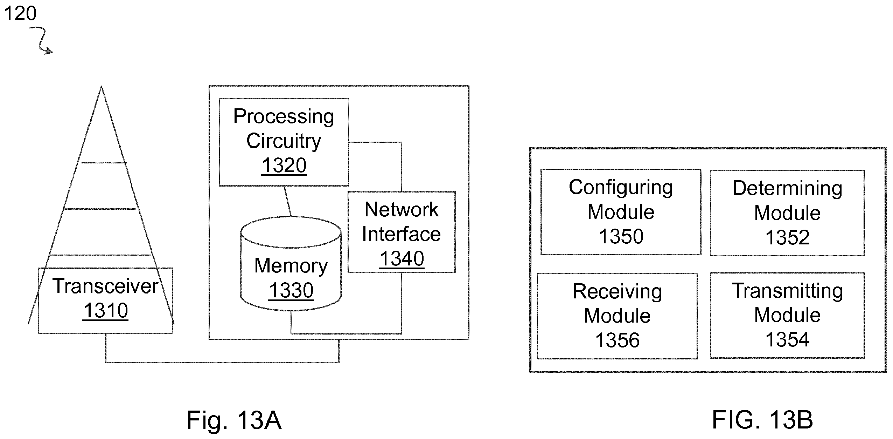

FIGURE 12B is a block diagram illustrating example components of a wireless device; FIGURE 13A is a block diagram illustrating an example embodiment of a network node; and

FIGURE 13B is a block diagram illustrating example components of a network node.

DETAILED DESCRIPTION

For Third Generation Partnership Project (3GPP) Long Term Evolution (LTE), packet data latency is important not only for the perceived responsiveness of the system, it is also a parameter that indirectly influences the throughput of the system. Latency reductions may improve radio resource efficiency. One aspect of packet latency reduction is reduction of transport time of data and control signaling by modifying the transmission time interval (TTI) length. In older LTE releases, a TTI corresponds to one subframe (SF) of length 1 millisecond. Newer LTE releases may specify transmissions with TTIs that are shorter than 1 millisecond. For example, the duration of the short TTI may be 0.5 ms (i.e., seven orthogonal frequency division multiplexing (OFDM) or single carrier-frequency-division multiplexing (SC-FDMA) symbols for the case with normal cyclic prefix). As another example, the duration of the short TTI may be 2 symbols or 4 symbols.

A wireless device, such as a user equipment (UE), may acquire system information (SI) using autonomous gaps. In E-UTRAN the serving cell can request the UE to acquire the cell global identifier (CGI) of a cell, which uniquely identifies the cell. To acquire the CGI of the cell, the UE reads at least part of the system information (SI) including master information block (MIB) and the relevant system information block (SIB) of that cell. The reading of SI for the acquisition of CGI is carried out during measurement gaps which are autonomously created by the UE (i.e., gaps are not configured by the network node, but left for the UE to create).

A problem with current LTE specifications is that the UE supports only one TTI (i.e., 1 ms). The UE requirements for SI acquisition of target cell are defined based on only 1 ms of TTI. The requirements are defined in terms of SI acquisition delay and number of ACK/NACK transmitted by the UE in the serving cell. This is to ensure that the UE does not create unnecessary autonomous gaps when it acquires the SI of the target cell. The UE supporting shorter TTI may lead to significant performance degradation if the same requirements are applied.

Particular embodiments obviate the problems described above. ACK requirements for reading CGI were derived assuming 1ms TTI duration for both uplink and downlink. When shorter TTI is used, a greater number of transmitted ACK/NACK is expected. Particular embodiments include a minimum number of uplink acknowledgements based on a TTI duration.

Some embodiments refer to the term "node." An example of a node may be a network node, which may be a more general term and can correspond to any type of radio network node or any network node that communicates with a UE and/or with another network node. Examples of network nodes include NodeB, base station (BS), multi-standard radio (MSR) radio node such as MSR BS, eNodeB, gNodeB. MeNB, SeNB, network controller, radio network controller (RNC), base station controller (BSC), relay, donor node controlling relay, base transceiver station (BTS), access point (AP), transmission points, transmission nodes, RRU, RRH, nodes in distributed antenna system (DAS), core network node (e.g. MSC, MME, etc.), O&M, OSS, SON, positioning node (e.g. E-SMLC), MDT etc.

Some embodiments refer to generic terminology such as "radio network node" or simply "network node (NW node)," which may be any kind of network node such as a base station, radio base station, base transceiver station, base station controller, network controller, evolved Node B (eNB), Node B, relay node, access point, radio access point, Remote Radio Unit (RRU) Remote Radio Head (RRH), etc.

Another example of a node may be user equipment, which is a non-limiting term user equipment (UE) and refers to any type of wireless device communicating with a network node and/or with another UE in a cellular or mobile communication system. Examples of UE are target device, device to device (D2D) UE, machine type UE or UE capable of machine to machine (M2M) communication, PDA, Tablet, mobile terminals, smart phone, laptop embedded equipped (LEE), laptop mounted equipment (LME), USB dongles, etc.

The term radio access technology, or RAT, may refer to any RAT, such as UTRA, E-UTRA, narrow band internet of things (NB-IoT), WiFi, Bluetooth, next generation RAT (NR), 4G, 5G, etc. Any of the first and the second nodes may be capable of supporting a single or multiple RATs.

The term "signal" used herein may be any physical signal or physical channel. Examples of physical signals are reference signal such as PSS, SSS, CRS, PRS, etc. The term "physical channel" (e.g., in the context of channel reception) used herein is also referred to as "channel." Examples of physical channels include MIB, PBCH, NPBCH, PDCCH, PDSCH, sPUCCH, sPDSCH. sPUCCH. sPUSCH, MPDCCH, NPDCCH, NPDSCH, E-PDCCH, PUSCH, PUCCH, NPUSCH, etc.

The term "time resource" used herein may correspond to any type of physical resource or radio resource expressed in terms of length of time. Examples of time resources include: symbol, time slot, subframe, radio frame, TTI, interleaving time, etc.

The term "TTI" used herein may correspond to any time period (T0) over which a physical channel can be encoded and optionally interleaved for transmission. The physical channel is decoded by the receiver over the same time period (T0) over which it was encoded. The TTI may also interchangeably called as short TTI (sTTI), transmission time, slot, sub-slot, mini-slot, short subframe (SSF), mini-subframe, etc.

The term "radio measurement" used herein may refer to any measurement based on receiving a radio signal or channel, e.g., power-based measurements such as received signal strength (e.g., RSRP or CSI-RSRP) or quality measurements (e.g., RSRQ, RS-SINR, SINR, Es/Iot, SNR); cell identification; synchronization signals measurements; angle measurements such as angle of arrival (AOA); timing measurements such as Rx-Tx, RTT, RSTD, TOA, TDOA, timing advance; throughput measurements; channel quality measurements such CSI, CQI, PMI, channel measurement (e.g., MIB, SIBs, SI, CGI acquisitions, etc.). A measurement may be absolute, relative to a common reference or to another measurement, composite measurement, etc. A measurement may be on one link or more than one link (e.g., RSTD, timing advance, RTT, relative RSRP, etc.). Measurements may also be differentiated by purpose and may be performed for one or more purposes, e.g., for one or more of: RRM, MDT, SON, positioning, timing control or timing advance, synchronization. In a non-limiting example, particular embodiments may apply to any measurement such as described above. Herein, the term "radio measurement" may be used in a broader sense, e.g., receiving a channel (e.g., receiving system information via broadcast or multicast channel).

The term "requirements" used herein may include any type of UE requirements related to UE measurements, such as measurement requirements, RRM requirements, mobility requirements, positioning measurement requirements, etc. Examples of UE requirements related to UE measurements are measurement time, measurement reporting time or delay, measurement accuracy (e.g., RSRP/RSRQ accuracy), number of cells to be measured over the measurement time, etc. Examples of measurement time include L1 measurement period, cell identification time or cell search delay, CGI acquisition delay, etc.

The term "interruption" or "interruption level" or "interruption performance" used herein may correspond to any type of interruption of signals between a UE and its serving cell (e.g., PCell, SCells, PSCell). The interruption may lead to loss or degradation of serving cell performance.

The interruptions may affect the performance of any one or more serving cells e.g. PCell, PSCell, SCell, etc. The loss in serving cell performance or the interruption can be expressed in terms of one or more metrics, which may be absolute or relative, such as error rate or loss of packets or packet loss rate or number of packets lost or packet drop rate or a reduction in the detection probability or an increase of misdetection probability or even probability of missed or dropped or lost packets. The interruption level can be expressed in terms of one or more time resources which are interrupted (e.g., interruption time of 1 subframe, 5 subframes, 1 TTI, 2 TTI, etc.).

A packet herein refers to any block of data, such as transport block, sent over a radio interface in uplink or downlink. The packet loss rate or number of lost packets is typically estimated over certain period of time (e.g., measurement time of a radio measurement, pre-defined time, etc.). In one example the number of lost packets is expressed as total number of missed ACK/NACK in response to continuous transmission of data to the UE from its serving cell over certain time period.

For example the number of packets lost in LTE with 1 ms TTI will be 10 if the UE is unable to transmit 10 ACK/NACK in uplink in response to continuous downlink transmission over a period of 100 ms. In this example, the corresponding packet loss rate is 10% or 0.1. This may also be stated as the probability with which the fraction of ACK/NACK transmitted in the uplink in response to continuous downlink transmission over a period are missed or dropped or lost. It may also be expressed as ratio of any one or both of the following: (a) the number of missed ACK/NACK transmitted by the UE in response to continuous transmission of downlink data to the UE from its serving cell over certain time period (T0); or (b) the total number of ACK/NACK transmitted by the UE in response to continuous transmission of downlink data to the UE from its serving cell if all data blocks are received.

Therefore, the serving cell performance (e.g., PCell, SCell, or PSCell performance) may be expressed in terms of the probability of missed ACK/NACK or in terms of total number of missed ACK/NACK in response to receiving downlink data. Interruption on PCell may be referred to as "PCell interruption in terms of number of missed ACK/NACK." Interruption on any SCell may be referred to as "SCell interruption in terms of number of missed ACK/NACK."

System information (SI) may include the information in any one or more of: MIB, SIB 1, SIB2, SIB3, SIB-NB, SIB-BR, etc.

In particular embodiments, a wireless network may be configured with different TTI patterns. For example, a UE may be configured with one serving cell (e.g., PCell), also referred to as single carrier operation. A UE herein is capable of at least two different TTIs (e.g., TTI of 1 ms and TTI of 2-OS, etc.). The UE can be configured with any one of the plurality of TTIs supported by the UE in one time resource in the serving cell. The UE may further be capable of supporting operation whereby the TTI is changed over time in the serving cell. The UE may further be capable of supporting operation using different TTI in uplink and downlink of the serving cell. An example of some basic scenarios are described in Table 1 below.

Table 1: Example of basic scenarios for TTI pattern

| No. | Cases | Examples of TTI patterns |
|---|---|---|
| 1 | Same TTI pattern is used in a cell continuously | TTI = 2-OS is used in all time resources in cell1 |
| 2 | Different TTI patterns are used in a cell in different time resources | TTI = 2-OS and TTI = 1 ms are used in different resources in cell1. |
| 3 | Different TTI patterns are used in the uplink and downlink of the same cell | TTI = 2-OS is used in downlink of cell1 and TTI = 7-OS is used in uplink of cell1 |
| 4 | Any combination of cases 2 and 3 | TTI = 2-OS and TTI =7-OS are used in different resources in downlink of cell1, whereas TTI = 7-OS is used in uplink in all time resources in cell1. |

Particular embodiments are described with reference to FIGURES 7-13B of the drawings, like numerals being used for like and corresponding parts of the various drawings. LTE is used throughout this disclosure as an example cellular system, but the ideas presented herein may apply to other wireless communication systems as well.

FIGURE 7 is a block diagram illustrating an example wireless network, according to a particular embodiment. Wireless network 100 includes one or more wireless devices 110 (such as mobile phones, smart phones, laptop computers, tablet computers, MTC devices, or any other devices that can provide wireless communication) and a plurality of network nodes 120 (such as base stations or eNodeBs). Network node 120 serves coverage area 115 (also referred to as cell 115).

In general, wireless devices 110 that are within coverage of radio network node 120 (e.g., within cell 115 served by network node 120) communicate with radio network node 120 by transmitting and receiving wireless signals 130. For example, wireless devices 110 and radio network node 120 may communicate wireless signals 130 containing voice traffic, data traffic (e.g., broadcast video), and/or control signals. A network node 120 communicating voice traffic, data traffic, and/or control signals to wireless device 110 may be referred to as a serving network node 120 for the wireless device 110. Wireless signals 130 may include both downlink transmissions (from radio network node 120 to wireless devices 110) and uplink transmissions (from wireless devices 110 to radio network node 120).

In some embodiments, wireless device 110 may be referred to by the non-limiting term "UE." A UE may include any type of wireless device capable of communicating with a network node or another UE over radio signals. The UE may comprise radio communication device, target device, device to device (D2D) UE, machine type UE or UE capable of machine to machine communication (M2M), a sensor equipped with UE, iPAD, Tablet, mobile terminals, smart phone, laptop embedded equipped (LEE), laptop mounted equipment (LME), USB dongles, Customer Premises Equipment (CPE), etc.

In some embodiments, network node 120 may include any type of network node such as a base station, radio base station, base transceiver station, base station controller, network controller, evolved Node B (eNB), gNB, Node B, multi-RAT base station, Multi-cell/multicast Coordination Entity (MCE), relay node, access point, radio access point, Remote Radio Unit (RRU) Remote Radio Head (RRH), a core network node (e.g., MME, SON node, a coordinating node, etc.), or even an external node (e.g., 3rd party node, a node external to the current network), etc.

Wireless network 100 may include various length TTI (e.g., TTI of 1 ms, or short TTI of 2os, 4os, 7os, etc., or any combination). In particular embodiments, wireless network 100 may include different TTI in the downlink and uplink.

Wireless device 110 may acquire a system information (SI) of another cell 115. Wireless device 100 may acquire the SI of cell 115 in autonomous gaps. Wireless device 110 may transmit a first number of uplink feedback signals in cell 115 in response to receiving downlink data in cell 115 if a first TTI is used by the UE in cell 115, and a second number of uplink feedback signals in cell 115 in response to receiving downlink data in cell 115 if a second TTI is used by the UE in cell 115. In particular embodiments, wireless device 110 may use the results of the acquired SI of cell 115 for performing one or more operational tasks, such as determining cell global identity (CGI), transmitting the results to another node, cell change, etc. The first TTI has a different length (i.e. in terms of number of symbols or time) than the second TTI.

Network node 120 may configure wireless device 110 to acquire a system information (SI) of another cell 115 using autonomous gaps. Network node 120 may determine a first number of uplink feedback signals that wireless device 110 may transmit in cell 115 in response to receiving downlink data in cell 115 if a first TTI is used by wireless device 110 in cell 115, or a second number of uplink feedback signals that wireless device 110 may transmit in cell 115 in response to receiving downlink data in cell 115 if a second TTI is used by wireless device 115 in cell 115. Network node 120 may transmit downlink data to wireless device 110. In particular embodiments, network node 120 may receive uplink feedback signals from wireless device 110.

Each network node 120 may have a single transmitter or multiple transmitters for transmitting wireless signals 130 to wireless devices 110. In some embodiments, network node 120 may comprise a multi-input multi-output (MIMO) system. Similarly, each wireless device 110 may have a single receiver or multiple receivers for receiving signals 130 from network nodes 120.

In wireless network 100, each radio network node 120 may use any suitable radio access technology, such as long term evolution (LTE), LTE-Advanced, NR, UMTS, HSPA, GSM, cdma2000, WiMax, WiFi, and/or other suitable radio access technology. Wireless network 100 may include any suitable combination of one or more radio access technologies. For purposes of example, various embodiments may be described within the context of certain radio access technologies. However, the scope of the disclosure is not limited to the examples and other embodiments could use different radio access technologies.

As described above, embodiments of a wireless network may include one or more wireless devices and one or more different types of radio network nodes capable of communicating with the wireless devices. The network may also include any additional elements suitable to support communication between wireless devices or between a wireless device and another communication device (such as a landline telephone). A wireless device may include any suitable combination of hardware and/or software. For example, in particular embodiments, a wireless device, such as wireless device 110, may include the components described below with respect to FIGURE 12A. Similarly, a network node may include any suitable combination of hardware and/or software. For example, in particular embodiments, a network node, such as network node 120, may include the components described below with respect to FIGURE 13A.

Particular embodiments include methods in a wireless device and in a network node. Example methods are illustrated in FIGURES 8 and 11.

FIGURE 8 is a flow diagram of an example method in a wireless device, according to some embodiments. In particular embodiments, one or more steps of method 800 may be performed by wireless device 110 of wireless network 100 described with reference to FIGURE 7.

Method 800 begins at step 812, where a wireless device obtains a request to acquire a SI of a second cell (cell2). For example, wireless device 110 may obtain a request to acquire a SI of a second cell 115 from network node 120.

In particular embodiments, the wireless device may be requested to acquire the SI of cell2, which may operate on the same carrier as that of the serving cell or on a different carrier than that of the serving cell. In one example, cell2 may operate on a first carrier (F1). In one example, cell2 may operate on a second carrier (F2). Cell2 can be intra-frequency cell or inter-frequency cell or cell of another RAT.

In particular embodiments, the wireless device may obtain the request or initiate the acquisition of the SI or a subset of the information contained in SI of cell2 based on any one or more of the following mechanisms: (a) measurement configuration message received from another node (e.g., a network node or another wireless device); (b) a message or an indication received from a higher layer in the wireless device indicating the need to acquire the SI of cell2; (c) event, condition, or a trigger based on which the wireless device should acquire the SI of cell2 (e.g., the wireless device may acquire the SI if signal quality of current serving cell falls below a threshold, or in another example the wireless device may acquire the SI if the wireless device acquires the same PCI for two or more cells including cell2); or (d) a timer in the wireless device indicating that the SI of cell2 needs to be acquired by the wireless device.

One specific example of a received request includes a RRC message containing one or more of "reportCGI," "report CSG indicator" or "reporting SI." The terms "acquisition of SI" or "acquiring SI" may also be referred to as "SI reading," "reading of SI," 'identifying or identification of SI," "determining SI," etc.

At step 814, the wireless device acquires the SI of cell2 during certain time period (T0). For example, wireless device 110 may acquire the SI of another cell 115 during a particular time period (e.g., 150 ms).

In particular embodiments, SI to be acquired by the wireless device may include one or more blocks containing SI (e.g., MIB, SIB1, SIB2, etc.). For example, the wireless device may be requested to acquire CGI of cell2 transmitting in SI of cell2. In another example, SI may include a closed subscriber group (CSG) indicator transmitted by cell2.

The wireless device may create autonomous gaps in one or more serving cells to acquire the SI of cell2 during certain time period (T0). The parameter, T0, can be pre-defined, configured by the network node or by another node. For example the wireless device may create at least 8 gaps each of 5 ms for acquiring MIB and SIB1 of cell2 during T0. The wireless device may further create one or more gaps each of 9 ms for acquiring AFC/AGC of cell2.

The wireless device is served by a first cell (cell1) (e.g., PCell). Cell1 may operate on F1 or on F2. During the autonomous gaps, the wireless device: may not transmit any signal in the uplink of a first cell (cell1), and may not receive any signal in the downlink from cell1.

At step 816, the wireless device determines a TTI length used for wireless communication with the wireless device in a first cell. For example, wireless device 110 may determine that its serving cell uses a short TTI in uplink and/or downlink (e.g., 2-os, 4-os, 7-os, etc.). Wireless device 110 may receive a TTI configuration from a network node, or wireless device 110 may be preconfigured to support one or more TTI durations. More examples of determining the TTI are described below.

At step 818, the wireless device receives downlink data from the first cell during time T0. For example, network node 120 may continuously transmit data to wireless device 110. Wireless device 110 may receive all or some of the data. For example, wireless device 110 may not receive data while performing measurements on another cell. Thus, wireless device 110 may receive a percentage of the data transmitted by network node 120.

At step 820, the wireless device may transmit a first minimum number (N1) of uplink feedback signals in a first cell (cell1) in response to receiving downlink data in cell1 if a first TTI (TTI1) is used by the wireless device in cell1 during T0, and a second minimum number (N2) of uplink feedback signals in cell1 in response to receiving downlink data in cell1 if a second TTI (TTI2) is used by the wireless device in cell1 during T0. For example, wireless device 110 may receive downlink data from a first cell (cell1) during T0 and in response to the received data in the downlink of cell1, the UE may transmit certain minimum number of uplink feedback signals in the uplink of cell1.

Wireless device 110 may determine a minimum number (N) of uplink feedback signals to be transmitted by wireless device 110 in cell1 in response to receiving data from cell1 during T0. An example of uplink feedback signal is ACK or NACK transmission. The determination of N by wireless device 110 may be a consequence of the autonomous gap scheduling which is determined by wireless device 110, rather than wireless device 110 explicitly performing a calculation to determine N.

For example, the wireless device may obtain the minimum number (N) of uplink feedback signals that the wireless device is required to transmit in response to at least continuous transmission of downlink data (e.g., PDSCH, sPDSCH, NPDSCH, etc.) in downlink time resources to the wireless device by the network node on cell1 during T0. The minimum number, N, is associated with the TTI used by the wireless device for operating signals in cell1.

The length of TTI in cell1 affects the number of downlink time resources in which the network node can schedule the wireless device in the downlink of cell1 (i.e., send downlink data in cell1) during T0. The TTI used in cell1 also affects the number of uplink time resources in which the wireless device sends the uplink feedback signals in response to downlink data in cell1 to the network node. Therefore, the value of N increases with shorter TTI. Larger value of N means that the network will have more opportunities for scheduling the wireless device in cell1 when the wireless device acquires the SI of cell2.

The wireless device may be capable of supporting at least two different TTIs (e.g., TTI1 = 1 ms and TTI = 2-OS). In another example, the wireless device may be capable of supporting more than 2 TTIs (e.g., TTI1=1 ms, TTI2=2-OS, TTI3=7-OS, etc.).

The continuous transmission of downlink data herein means that the network node transmits data in all the downlink time resources (e.g., downlink subframes) in cell1 to the wireless device during the SI acquisition time (i.e., over time T0). The minimum number, N, may be applicable under or associated with additional conditions or constraints which may include of one or more of: (a) during at least part of T0, the wireless device is not configured with a measurement gap; (b) the wireless device is not configured with a DRX cycle; (c) the wireless device is not operating in DRX; (d) the wireless device is configured to receive downlink data from the network node with a pre-defined number of code words in one subframe (e.g., 1 code word per subframe) and no MBSFN subframe is configured in serving cell (or PCell). Examples of subframes which can be configured as MBSFN subframes are subframes # 1, 2, 3, 6, 7 and 8 for FDD and subframes # 3, 4, 7, 8 and 9 for TDD. The MBSFN subframe can contain only PMCH and not PDSCH (or sPDSCH).

The parameter N may further comprise parameters N1 or N2. The parameter N (or N1 and N2) may further depend on the TDD configurations (i.e., TDD uplink/downlink subframe configurations) used in cell1. For example, for TDD uplink/downlink configuration # 0 and TDD uplink/downlink configuration # 1, the values of N can be 18 and 35, respectively. The value of parameters N1 and N2 may be pre-defined or configured at the wireless device by the network node.

The parameter N = N1, wherein N1 is the minimum number of uplink feedback signals that the wireless device is required to transmit in cell1 in response to at least continuous transmission of downlink data (e.g., PDSCH) to the wireless device by the network node on cell1 during T0 when the wireless device is configured to use a first TTI (TTI1) for operating signals in cell1.

The parameter N = N2, wherein N2 is the minimum number of uplink feedback signals that the wireless device is required to transmit in cell1 in response to at least continuous transmission of downlink data (e.g., PDSCH) to the wireless device by the network node on cell1 during T0 when the wireless device is configured to use a second TTI (TTI2) for operating signals in cell1.

To determine the value of N (N1 or N2) the wireless device may first determine the value of TTI configured for operating signals between the wireless device and cell1. For example, the wireless device determines whether it is configured with TTI1 or TTI2 for operation in cell1.

In one example, downlink and uplink of cell1 may use the same TTI in the downlink and uplink of cell1, while in another example different TTIs are used in downlink and uplink of cell1. Therefore, the wireless device may further obtain TTI of downlink cell1 as well as TTI of uplink cell1.

The wireless device may determine the TTI configured for operating signals in cell1 based on one or more of the following mechanisms: (a) configuration received from the network node, such as a PCell (e.g., the wireless device may determine the TTI used in cell1 by receiving control signals in downlink or by receiving a RRC message); (b) pre-defined rule, such as pre-defined information related to TTI and carrier frequency (e.g., relation between TTI and frequency band of the carrier frequency used in cell1 (F1)), or apply same TTI as used in a reference cell (e.g., PCell, PSCell), or based on TTI used in the opposite direction of cell1 (e.g., assume same TTI in uplink and downlink cell1, or assume uplink cell1 uses TTI which is not shorter than the TTI of the downlink cell1); and (c) autonomous determination (e.g., blind detection by the wireless device by attempting to decode downlink channel of different pre-define TTIs).

The wireless device, after determining the TTI used in cell1, determines the value of N (N1 or N2) by using a relation between T0, TTIs and values of N. In yet another example, the wireless device determines the value of N (N1 or N2) by using a relation between T0, TTIs, values of N and the TDD configuration (i.e., uplink/downlink subframe configuration). The value of parameters N, TTI and T0 and their association may be pre-defined or configured at the wireless device by the network node. The relation can be expressed in terms of a function or a mapping table.

An example of a function relating N, TTI and T0 is expressed by (1):

$$N = f(TTI, T0) \qquad\qquad (1)$$

Another example of a function relating N, TTI, T0 and TDD subframe configuration (Cg) used in cell1 is expressed by (2):

$$N = f(TTI, T0, Cg) \qquad\qquad (2)$$

In one example embodiment, the same TTI is used in the uplink of cell1 and the downlink of cell1. In a further aspect of some embodiments, different TTIs can be used in the uplink of cell1 and the downlink of cell1.

In another example, the value of N may further depend on TTI (TTId) used in the downlink of cell1 and the TTI (TTIu) used in the uplink of cell1. An example of a function relating N, TTId, TTIu and T0 is expressed by (3):

$$N = f(TTId, TTIu, T0) \qquad\qquad (3)$$

Another example of a function relating N, TTId, TTIu, T0 and TDD subframe configuration (Cg) used in cell1 is expressed by (4):

$$N = f(TTId, TTIu, T0, Cg) \qquad\qquad (4)$$

An example of the mapping table relating TTI, N and T0 is shown in Table 2. Table 2 assumes that the same TTI is used in cell1. For example, if the wireless device is configured with TTI = 2-OS then the value of N = X2. But if the wireless device is configured with TTI = 1 ms then N = X1.

Table 2: Example of value of N for different TTI assuming the same TTI in uplink and downlink of cell1

| TTI length in cell1 | N (number of uplink feedback signals during T0) |
| --- | --- |
| 1 ms | X1 |
| 2-OS | X2 |
| 4-OS | X3 |
| 7-OS | X4 |

An example in Table 3 illustrates a number of uplink feedback signals (e.g., ACK/NACK) sent by the wireless device in cell1 during T0 when same TTI is used in the uplink and the downlink of cell1. The example in table 3 is for FDD.

Table 3: Example of specific values of N (uplink ACK/NACK) sent by wireless device in cell1 for different TTI assuming the same TTI in uplink and downlink of cell1

| TTI length in cell1 | N (number of UL ACK/NACK sent by the wireless device in cell1 during T0) |
|---|---|
| 1 ms | 60 |
| 2-OS | 465 |
| 4-OS | 279 |
| 7-OS | 164 |

Thus, for a first TTI value which is shorter than a second TTI value, the first minimum number N1 of feedback signals is higher than the second minimum number N2 of feedback signals. For example, for a first TTI of 2 OS, the first minimum number N1 of feedback signals is 465 within a time period. When the wireless device is operating according to a second, longer, TTI, for example, 1ms TTI i.e. 14 symbols, the second minimum number N2 of feedback signals is lower than in the first TTI over the same time period, e.g. 60 feedback signals. This relationship is applicable to any combination of TTI lengths.

Another example of the mapping table relating TTI, N and T0 is shown in Table 4. In Table 4, some embodiments assume that the same TTI is used in cell1, while another set of embodiments assume that different TTIs are used in the uplink and downlink of cell1. For example, if the wireless device is configured with TTI = 2-OS in downlink and TTI= 1 ms in uplink, then the value of N = X31. But if the wireless device is configured with TTI = 1 in downlink and TTI= 2-OS in uplink of cell1, then the value of N = X41.

Table 4: Example of value of N for same or different TTIs in uplink and downlink of cell1

| TTI length in downlink of cell1 | TTI length in uplink of cell1 | N (number of uplink feedback signals during T0) |
|---|---|---|
| 1 ms | 1 ms | X1 |
| 2-OS | 2-OS | X2 |
| 2-OS | 1 ms | X31 |
| 1 ms | 2-OS | X41 |

An example in Table 5 gives example numbers of uplink feedback signals (e.g., ACK/NACK) sent by the wireless device in cell1 during T0 when different TTIs are used in the uplink and the downlink of cell1. The example in Table 5 is for FDD.

Table 5: Example of specific values of N (uplink ACK/NACK) sent by wireless device in cell1 for different TTI assuming different TTIs are used in uplink and downlink of cell1

| TTI length in downlink of cell1 | TTI length in uplink of cell1 | N (number of uplink feedback signals during T0) |
|---|---|---|
| 1 ms | 1 ms | 60 |
| 2-OS | 2-OS | 465 |
| 2-OS | 1 ms | 465 |
| 1 ms | 2-OS | 60 |

After determining the value of N based on at least the TTI used in cell1, the wireless device may transmit at least the determined number of uplink feedback signals in the uplink of cell1 in response to receiving downlink data from cell1 during T0. The wireless device further acquires the SI of cell1 during T0.

The wireless device, such as wireless device 110, may use the results of the acquired SI of cell2 or a subset of the information in the SI of cell2 for performing one or more operational tasks. Examples of the operational tasks may include: (a) reporting the results of the SI measurement to another node (e.g., a network node or another wireless device); (b) using the SI measurement results for one or more operations (e.g., for positioning, power control, link adaptation, cell change such as handover); (c) performing the SI measurement while meeting a pre-defined requirement (e.g., measurement time (T1), minimum number of uplink feedback signals during T1, number of correctly received messages, etc.); (d) storing the results and using them at a later time; and/or (e) verification of cell (e.g., comparing the PCI and CGI of cell1.)

Modifications, additions, or omissions may be made to method 800 illustrated in FIGURE 8. Additionally, one or more steps in method 800 may be performed in parallel or in any suitable order.

FIGURE 9 illustrates example HARQ feedback for downlink/uplink configuration for 4os/4os and 7os/7os, according to some embodiments; and FIGURE 10 illustrates example HARQ feedback for downlink/uplink configuration for 2os/2os and 2os/1ms, according to some embodiments.

FIGURE 11 is a flow diagram of an example method in a network node, according to some embodiments. In particular embodiments, one or more steps of method 1100 may be performed by components of wireless network 100 described with reference to FIGURE 7.

Method 1100 begins at step 1162, where a network node configures a wireless device to acquire a system information (SI) of a second cell (cell2) during time period (T0). For example, network node 120 may transmit a request to wireless device 110 to acquire SI of a second cell (cell2).

In particular embodiments, the network node may first determine the need for the wireless device to acquire SI of cell2. This can be based on the need to perform one or more tasks (e.g., cell change, SON, positioning, etc.). The network node may send the request to the wireless device based on any of the examples described with respect to FIGURE 8.

At step 1164, the network node determines a TTI length used for wireless communication with the wireless device in a first cell. For example, network node 120 may determine that wireless device 110 uses a short TTI in uplink and/or downlink (e.g., 2-os, 4-os, 7-os, etc.). More examples of determining the TTI are described below and above with respect to FIGURE 8.

At step 1166, the network node transmits a continuous transmission of downlink data to the wireless device during time T0. For example, network node 120 may transmit downlink data to the wireless device 110 during T0 in cell1. Network node 120 may transmit data to wireless device 110 in all downlink time resources during at least T0 of cell1. If the wireless device cannot acquire the SI of cell2 during T0, then the network node may schedule downlink data in all downlink time resources over a time period longer than T0 (e.g., over T1 where T1>T0).

At step 1168, the network node receives a minimum number N of uplink feedback signals during time T0. For example, network node 120 may receive N feedback signals from wireless device 110.

In some embodiments, the network node determines a first minimum number (N1) of uplink feedback signals that the wireless device may transmit in a first cell (cell1) in response to receiving downlink data in cell1 if a first TTI (TTI1) is used by the wireless device in cell1 during T0, or a second minimum number (N2) of uplink feedback signals that the wireless device may transmit in cell1 in response to receiving downlink data in cell1 if a second TTI (TTI2) is used by the wireless device in cell1 during T0.

For example, network node 120 may determine a certain minimum number (N) of uplink feedback signals that wireless device 100 may transmit in a first cell (cell1) in response to receiving downlink data in cell1.

The value of N depends on the value of TTI used by the wireless device in cell1. The value of N may further depend on whether the same TTI is used in uplink and downlink of cell1, or different TTIs are used in the uplink and downlink of cell1. The network node determines the value of N as function of at least the TTI used in cell1 (or TTIs used in uplink and downlink of cell1) based on the same principles, functions or mapping tables as described with respect to FIGURE 8.

The network node may receive N1 uplink feedback signals from the wireless device in cell1 response to transmitting downlink data in cell1 if TTI1 is used by the wireless device in cell1 during T0, or N2 uplink feedback from the wireless device in cell1 in response to transmitting downlink data in cell1 if TTI2 is used by the wireless device in cell1 during T0. For example, network node 120 may receive a certain number of uplink feedback signals in response to transmitting downlink data to wireless device 110 in cell1 during at least T0.

The network node expects to receive at least N1 uplink feedback signals from the wireless device if the wireless device can acquire SI in T0 if TTI1 is used by the wireless device for operating signals in cell1. The network node expects to receive at least N2 uplink feedback signals from the wireless device if the wireless device can acquire SI in T0 if TTI2 is used by the wireless device for operating signals in cell1. The number of uplink feedback signals received by the network node from the wireless device in response to transmitting downlink data to the wireless device in cell1 during at least T0 may further depend on whether the same or different TTIs are used in the uplink and downlink of cell1 during T0.

The network node, such as network node 120, may use the results of the number of received uplink feedback signals from the wireless device in cell1 and/or results of the acquired SI of cell1 for performing one or more operational tasks. Examples of operational tasks may include: (a) using the SI measurement results for one or more operations (e.g., for positioning, power control, link adaptation, cell change such as handover, etc.); (b) storing the results and using them at a later time; (c) verification of cell (.g., comparing the PCI and CGI of cell1); (d) adapting or enhancing scheduling of data to the wireless device in uplink and/or downlink of the wireless device's serving cell; (d) adapting the measurement configuration and transmitting the adapted measurement configuration to the wireless device; and/or (e) reconfiguring cell parameters (e.g., transmission power, antenna transmission mode, etc.).

Modifications, additions, or omissions may be made to method 1100 illustrated in FIGURE 11. Additionally, one or more steps in method 1100 may be performed in parallel or in any suitable order.

FIGURE 12A is a block diagram illustrating an example embodiment of a wireless device. The wireless device is an example of the wireless devices 110 illustrated in FIGURE 7. Particular examples include a mobile phone, a smart phone, a PDA (Personal Digital Assistant), a portable computer (e.g., laptop, tablet), a sensor, a modem, a machine type (MTC) device / machine to machine (M2M) device, laptop embedded equipment (LEE), laptop mounted equipment (LME), USB dongles, a device-to-device capable device, a NB-IoT device, or any other device that can provide wireless communication. The wireless device includes transceiver 1210, processing circuitry 1220, memory 1230, and power source 1240. In some embodiments, transceiver 1210 facilitates transmitting wireless signals to and receiving wireless signals from wireless network node 120 (e.g., via an antenna), processing circuitry 1220 executes instructions to provide some or all of the functionality described herein as provided by the wireless device, and memory 1230 stores the instructions executed by processing circuitry 1220. Power source 1240 supplies electrical power to one or more of the components of wireless device 110, such as transceiver 1210, processing circuitry 1220, and/or memory 1230.

According to some embodiments, wireless device 110 is capable of obtaining a request to acquire SI of a cell; obtaining the SI of the cell during a time period (T0); and determining a TTI length used for wireless communication in its serving cell(s). When the determined TTI length equals a first TTI value (TTI1), the wireless device transmits a first minimum number (N1) of uplink feedback signals in the uplink of the serving cell during T0. When the determined TTI length equals a second TTI value (TTI2), the wireless device transmits a second minimum number (N2) of uplink feedback signals in the uplink of the serving cell during T0.

Processing circuitry 1220 includes any suitable combination of hardware and software implemented in one or more integrated circuits or modules to execute instructions and manipulate data to perform some or all of the described functions of the wireless device. In some embodiments, processing circuitry 1220 may include, for example, one or more computers, one more programmable logic devices, one or more central processing units (CPUs), one or more microprocessors, one or more applications, and/or other logic, and/or any suitable combination of the preceding. Processing circuitry 1220 may include analog and/or digital circuitry configured to perform some or all of the described functions of wireless device 110. For example, processing circuitry 1220 may include resistors, capacitors, inductors, transistors, diodes, and/or any other suitable circuit components.

Memory 1230 is generally operable to store computer executable code and data. Examples of memory 1230 include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or or any other volatile or non-volatile, non-transitory computer-readable and/or computer-executable memory devices that store information.

Power source 1240 is generally operable to supply electrical power to the components of wireless device 110. Power source 1240 may include any suitable type of battery, such as lithium-ion, lithium-air, lithium polymer, nickel cadmium, nickel metal hydride, or any other suitable type of battery for supplying power to a wireless device.

In particular embodiments, processing circuitry 1220 in communication with transceiver 1210 acquires system information in an autonomous gap and transmits measurement results to network node 120, according to any of the embodiments described herein. Other embodiments of the wireless device may include additional components (beyond those shown in FIGURE 12A) responsible for providing certain aspects of the wireless device's functionality, including any of the functionality described above and/or any additional functionality (including any functionality necessary to support the solution described above).

FIGURE 12B is a block diagram illustrating example components of a wireless device 110. The components may include obtaining module 1250, determining module 1252, receiving module 1254, and transmitting module 1256.

Obtaining module 1250 may perform the obtaining functions of wireless device 110. For example, obtaining module 1250 may perform the obtaining functions of steps 812 and 814 in FIGURE 8. In certain embodiments, obtaining module 1250 may include or be included in processing circuitry 1220. In particular embodiments, obtaining module 1250 may communicate with determining module 1252, receiving module 1254 and transmitting module 1254.

Determining module 1252 may perform the determining functions of wireless device 110. For example, determining module 1252 may perform the determining functions of step 816 in FIGURE 8. In certain embodiments, determining module 1252 may include or be included in processing circuitry 1220. In particular embodiments, determining module 1252 may communicate with obtaining module 1250, receiving module 1254 and transmitting module 1254.

Receiving module 1254 may perform the receiving functions of wireless device 110. For example, receiving module 1254 may perform the receiving functions of step 818 in FIGURE 8. In certain embodiments, transmitting module 1254 may include or be included in processing circuitry 1220. In particular embodiments, transmitting module 1254 may communicate with obtaining module 1250 and acquiring module 1252.

Transmitting module 1256 may perform the transmitting functions of wireless device 110. For example, transmitting module 1256 may perform the transmitting functions of step 820 in FIGURE 8. In certain embodiments, transmitting module 1256 may include or be included in processing circuitry 1220. In particular embodiments, transmitting module 1256 may communicate with obtaining module 1250, determining module 1252 and receiving module 1254.

FIGURE 13A is a block diagram illustrating an example embodiment of a network node. Network node 120 can be an eNodeB, a nodeB, a base station, a wireless access point (e.g., a Wi-Fi access point), a low power node, a base transceiver station (BTS), a transmission point or node, a remote RF unit (RRU), a remote radio head (RRH), or other radio access node. Network node 120 includes at least one transceiver 1310, processing circuitry 1320, at least one memory 1330, and at least one network interface 1340. Transceiver 1310 facilitates transmitting wireless signals to and receiving wireless signals from a wireless device, such as wireless devices 110 (e.g., via an antenna); processing circuitry 1320 executes instructions to provide some or all of the functionality described above as being provided by a network node 120; memory 1330 stores the instructions executed by processing circuitry 1320; and network interface 1340 communicates signals to backend network components, such as a gateway, switch, router, Internet, Public Switched Telephone Network (PSTN), controller, and/or other network nodes 120. Processing circuitry 1320 and memory 1330 can be of the same types as described with respect to processing circuitry 1220 and memory 1230 of FIGURE 12A above.

The network node is capable of configuring a wireless device to acquire SI of a cell during a time period (T0); determining a TTI length used for wireless communication with the wireless device in a serving cell; and transmitting a continuous allocation of downlink data to the wireless device during time T0. When the determined TTI length equals a first TTI value (TTI1), the network node is capable of receiving a first minimum number (N1) of uplink feedback signals from the wireless device during T0. When the determined TTI length equals a second TTI value (TTI2), the network node is capable of receiving a second minimum number (N2) of uplink feedback signals from the wireless device during T0.

In some embodiments, network interface 1340 is communicatively coupled to processing circuitry 1320 and refers to any suitable device operable to receive input for network node 120, send output from network node 120, perform suitable processing of the input or output or both, communicate to other devices, or any combination of the preceding. Network interface 1340 includes appropriate hardware (e.g., port, modem, network interface card, etc.) and software, including protocol conversion and data processing capabilities, to communicate through a network. In particular embodiments, processing circuitry 1320 in communication with transceiver 1310 transmits downlink data to wireless device 110 and receives uplink feedback signals from wireless device 110.

Other embodiments of network node 120 include additional components (beyond those shown in FIGURE 13A) responsible for providing certain aspects of the network node's functionality, including any of the functionality described above and/or any additional functionality (including any functionality necessary to support the solution described above). The various different types of radio network nodes may include components having the same physical hardware but configured (e.g., via programming) to support different radio access technologies, or may represent partly or entirely different physical components.

FIGURE 13B is a block diagram illustrating example components of a network node 120. The components may include configuring module 1350, determining module 1352, transmitting module 1354 and receiving module 1356.

Configuring module 1350 may perform the configuring functions of network node 120. For example, configuring module 1350 may perform the configuring functions of step 1162 in FIGURE 11. In certain embodiments, configuring module 1350 may include or be included in processing circuitry 1320. In particular embodiments, configuring module 1350 may communicate with determining module 1352, transmitting module 1354 and receiving module 1356.

Determining module 1352 may perform the determining functions of network node 120. For example, determining module 1352 may perform the determining functions of step 1164 in FIGURE 11. In certain embodiments, determining module 1352 may include or be included in processing circuitry 1320. In particular embodiments, determining module 1352 may communicate with configuring module 1350, transmitting module 1354, and receiving module 1356.

Transmitting module 1354 may perform the transmitting functions of network node 120. For example, transmitting module 1354 may perform the transmitting functions of step 1166 in FIGURE 11. In certain embodiments, transmitting module 1354 may include or be included in processing circuitry 1320. In particular embodiments, transmitting module 1354 may communicate with configuring module 1250, determining module 1352, and receiving module 1356.

Receiving module 1356 may perform the receiving functions of network node 120. For example, receiving module 1356 may perform the receiving functions of step 1168 in FIGURE 11. In certain embodiments, receiving module 1356 may include or be included in processing circuitry 1320. In particular embodiments, receiving module 1356 may communicate with configuring module 1350, determining module 1352 and transmitting module 1354.

Some embodiments of the disclosure may provide one or more technical advantages. For example, a particular advantage of some embodiments is that UE behavior with respect to serving cell performance when it acquires the SI of a target cell is well defined. Another advantage is that the scheduling performance of data to the UE in the serving cell is enhanced. This is because the scheduling grants can be utilized more efficiently. Also, SI acquisition performance can be at least maintained or even enhanced, even if a UE uses different TTIs in the uplink and downlink of its serving cell. Some embodiments may benefit from some, none, or all of these advantages. Other technical advantages may be readily ascertained by one of ordinary skill in the art.

Although this disclosure has been described in terms of certain embodiments, alterations and permutations of the embodiments will be apparent to those skilled in the art. Although some embodiments have been described with reference to certain radio access technologies, any suitable radio access technology (RAT) or combination of radio access technologies may be used, such as long term evolution (LTE), LTE-Advanced, NR, UMTS, HSPA, GSM, cdma2000, WiMax, WiFi, etc. Accordingly, the above description of the embodiments does not constrain this disclosure. Other changes, substitutions, and alterations are possible without departing from the scope of this disclosure.

In some aspects, the examples may be defined without one or more of: obtaining a request to acquire SI of the second cell; obtaining the SI of the second cell during a time period (T0); and/or determining a TTI length used in the first cell.

The following examples are examples of how certain aspects of the embodiments described herein could be implemented within the framework of a specific communication standard. In particular, the following examples provide a non-limiting example of how the embodiments described herein could be implemented within the framework of a 3GPP RAN standard. The changes described by the examples are merely intended to illustrate how certain aspects of the embodiments could be implemented in a particular standard. However, the embodiments could also be implemented in other suitable manners, both in the 3GPP Specification and in other specifications or standards.

The following sections can be modified in 3GPP TS 36.133 v14.1.0.

E-UTRAN FDD intra frequency measurements with autonomous gaps Identification of a new CGI of E-UTRA cell with autonomous gaps

No explicit neighbour list is provided to the UE for identifying a new CGI of E-UTRA cell. The UE shall identify and report the CGI when requested by the network for the purpose 'reportCGI'. The UE may make autonomous gaps in downlink reception and uplink transmission for receiving MIB and SIB1 message according to clause 5.5.3.1 of TS 36.331. Note that a UE is not required to use autonomous gap if si-RequestForHO is set to false. If autonomous gaps are used for measurement with the purpose of 'reportCGI', regardless of whether DRX or eDRX_CONN is used or not, or whether SCell(s) are configured or not, the UE shall be able to identify a new CGI of E-UTRA cell within:

$$T_{identify\_CGI,intra} = T_{basic\_identify\_CGI,intra} \quad ms$$

where $T_{basic\_identify\_CGI,intra}$ = 150 ms. This is the time period used in the above equation where the maximum allowed time for the UE to identify a new CGI of an E-UTRA cell is defined, provided that the E-UTRA cell has been already identified by the UE.

A cell shall be considered identifiable following conditions are fulfilled: (a) RSRP related side conditions given in Clause 9.1 are fulfilled for a corresponding Band; and (b) SCH_RP and SCH Ês/Iot according to Annex B.2.2 for a corresponding Band

The MIB of an E-UTRA cell whose CGI is identified shall be considered decodable by the UE provided the PBCH demodulation requirements are met.

The requirement for identifying a new CGI of an E-UTRA cell within $T_{basic\_identify\_CGI,.intra}$ is applicable when no DRX is used as well as when any of the DRX or eDRX_CONN cycles specified in TS 36.331 is used.

Within the time, $T_{identify\_CGI,intra}$ *ms*, over which the UE identifies the new CGI of E-UTRA cell, the UE shall transmit at least $N_{min}$ of ACK/NACKS on PCell or each of activated SCell(s) as specified in Table 6, provided one or more of that: (a) there is continuous downlink data allocation; (b) no DRX and no eDRX_CONN cycle is used; (c) no measurement gaps are configured; (d) only one code word is transmitted in each subframe; and (e) no MBSFN subframes are configured in the PCell or each of activated SCell(s).

Table 6: Requirement on minimum number of ACK/NACKs to transmit during

| $T_{basic\_identify\_CGI,intra}$ | |
|---|---|
| TTI of serving cell | Minimum number of transmitted ACK/NACKs in serving cell ($N_{min}$) |
| 1 ms | 60 |
| 2 OFDM symbols | 465 |

E-UTRAN FDD-FDD inter frequency measurements with autonomous gaps Identification of a new CGI of E-UTRA FDD cell with autonomous gaps

No explicit neighbour list is provided to the UE for identifying a new CGI of E-UTRA cell. The UE shall identify and report the CGI when requested by the network for the purpose of 'reportCGI'. The UE may make autonomous gaps in both downlink reception and uplink transmission for receiving MIB and SIB1 message according to clause 5.5.3.1 of TS 36.331 . Note that a UE is not required to use autonomous gap if si-RequestForHO is set to false. If autonomous gaps are used for measurement with the purpose of 'reportCGI', regardless of whether DRX or eDRX_CONN is used or not, or whether SCell(s) are configured or not, the UE shall be able to identify a new CGI of E-UTRA cell within:

$$T_{identify\_CGI,inter} = T_{basic\_identify\_CGI,inter} \quad ms$$

where $T_{basic\_identify\_CGI,inter}$ = 150 ms. This is the time period used in the above equation where the maximum allowed time for the UE to identify a new CGI of E-UTRA cell is defined, provided that the E-UTRA cell has been already identified by the UE.

A cell shall be considered identifiable following conditions are fulfilled: (a) RSRP related side conditions given in Clause 9.1 are fulfilled for a corresponding Band; and (b) SCH_RP|dBm and SCH Ês/Iot according to Annex B.2.3 for a corresponding Band.

The MIB of an E-UTRA cell whose CGI is identified shall be considered decodable by the UE provided the PBCH demodulation requirements are met.

The requirement for identifying a new CGI of an E-UTRA cell within $T_{basic\_identify\_CGI,inter}$ is applicable when no DRX is used as well as when any of the DRX or eDRX_CONN cycles specified in TS 36.331 is used.

Within the time, $T_{identify\_CGI,intra}$ ms, over which the UE identifies the new CGI of E-UTRA cell, the UE shall transmit at least $N_{min}$ ACK/NACKs on PCell or each of activated SCell(s) as specified in Table 7, provided one or more of that: (a) there is continuous DL data allocation; (b) no DRX and no eDRX_CONN cycle is used; (c) no measurement gaps are configured; (d) only one code word is transmitted in each subframe; and (e) no MBSFN subframes are configured in the PCell or each of activated SCell(s).

Table 7: Requirement on minimum number of ACK/NACKS to transmit during

| $T_{basic\_identify\_CGI,inter}$ | |
|---|---|
| TTI of serving cell | Minimum number of transmitted ACK/NACKs in serving cell ($N_{min}$) |
| 1 ms | 60 |
| 2 OFDM symbols | 465 |

Abbreviations:

| | |
|---|---|
| 3GPP | 3rd Generation Partnership Project |
| BLER | Block Error Rate |
| CGI | Cell Global Identifier |
| CFI | Control Format Indicator |
| CP | Cyclic Prefix |
| CRS | Common Reference Signal |
| DFT | Discrete Fourier Transform |
| DMRS | Demodulation Reference Signal |
| eMTC | enhanced MTC |
| eNB | Evolved Node B |
| eNodeB | Evolved Node B |
| E-UTRA | Enhanced UTRA |
| FDD | Frequency Division Duplex |
| HARQ | Hybrid Automatic Repeat Request |
| LTE | Long-Term Evolution |
| MIB | Master Information Block |
| MTC | Machine Type Communication |
| OFDM | Orthogonal Frequency |
| PCFICH | Physical CFI Channel |
| PDCCH | Physical Downlink Control Channel |

| | |
|---|---|
| PDSCH | Physical Downlink Shared Channel |
| PHICH | Physical HARQ Indication Channel |
| PRB | Physical Resource Block |
| PSS | Primary Synchronization Source |
| RAT | Radio Access Technology |
| RF | Radio Frequency |
| RRC | Radio Resource Control |
| SC-FDMA | Single Carrier-Frequency-Division Multiplexing |
| SFN | Single Frequency Network/System Frame Number |
| SI | System Information |
| SIB | System Information Block |
| SSS | Secondary Synchronization Source |
| TDD | Time Division Duplex |
| TTI | Transmission Time Interval |
| UE | User Equipment |
| UMTS | Universal Mobile Telecommunications System |
| UTRA | UMTS Terrestrial Radio Access |

**Claims**

1. A method for use in a wireless device in communication with a first cell for acquiring system information, SI, of a second cell, the first cell operable to use two or more transmission time intervals, TTIs, the method comprising:

   obtaining (812) a request to acquire SI of the second cell;
   obtaining (814) the SI of the second cell during a time period, T0;
   determining (816) a TTI length used for wireless communication with the wireless device in the first cell;
   in response to receiving (818) downlink data from the first cell during time T0:

   when the determined TTI length equals a first TTI value, TTI1, transmitting (820) a first minimum number, N1, of uplink feedback signals in the uplink of the first cell during T0; and
   when the determined TTI length equals a second TTI value, TTI2, transmitting (820) a second minimum number, N2, of uplink feedback signals in the uplink of the first cell during T0;
   wherein TTI1 is a shorter duration than TTI2 and N1 is greater than N2.

2. The method of Claim 1, wherein determining (816) the TTI length comprises determining one of an uplink TTI length used in the first cell and a downlink TTI length used in the first cell.

3. The method of any of Claims 1-2, wherein obtaining (814) the SI of the second cell includes measuring signals in a number of measurement gaps, and the method further comprises:
   when the wireless device is not able to transmit N1 or N2 uplink feedback signals during T0, reducing the number of measurement gaps or increasing T0, or, wherein obtaining (814) the SI of the second cell includes measuring signals in a number of measurement gaps, and the method further comprises:
   when the wireless device is not able to transmit N1 or N2 uplink feedback signals during T0, reducing the number of measurement gaps or increasing T0 and wherein measurement gaps comprise autonomous gaps created by the wireless device in at least the first cell during time T0.

4. The method of Claim 1, wherein TTI1 is shorter than 1 ms and N1 is greater than 60, and/or wherein N1 and N2 are dependent on a time division duplex (TDD) uplink/downlink subframe configuration of the first cell.

5. The method of any of Claims 1-4, wherein the uplink feedback signals include hybrid automatic repeat request, HARQ, acknowledgment, ACK, and negative acknowledgement, NACK, signals.

6. A wireless device (110) in communication with a first cell (115) for acquiring system information, SI, of a second cell (115), the first cell operable to use two or more transmission time intervals, TTIs, the wireless device comprising processing circuitry (1120) operable to:

   obtain a request to acquire SI of the second cell;

obtain the SI of the second cell during a time period, T0;
determine a TTI length used for wireless communication with the wireless device in the first cell;
in response to receiving downlink data from the first cell during time T0:

when the determined TTI length equals a first TTI value, TTI1, transmit a first minimum number, N1, of uplink feedback signals in the uplink of the first cell during T0; and
when the determined TTI length equals a second TTI value, TTI2, transmit a second minimum number, N2, of uplink feedback signals in the uplink of the first cell during T0;
wherein TTI1 is a shorter duration than TTI2 and N1 is greater than N2.

7. The wireless device of Claim 6, wherein the processing circuitry is operable to determine the TTI length by determining one of an uplink TTI length used in the first cell and a downlink TTI length used in the first cell.

8. The wireless device of any of Claims 6-7, wherein the processing circuitry is operable to obtain the SI of the second cell by measuring signals in a number of measurement gaps, and the processing circuitry is further operable to: when the wireless device is not able to transmit N1 or N2 uplink feedback signals during T0, reduce the number of measurement gaps or increase T0, or, wherein the processing circuitry is operable to obtain the SI of the second cell by measuring signals in a number of measurement gaps, and the processing circuitry is further operable to: when the wireless device is not able to transmit N1 or N2 uplink feedback signals during T0, reduce the number of measurement gaps or increase T0 and wherein measurement gaps comprise autonomous gaps created by the wireless device in at least the first cell during time T0.

9. The wireless device of Claim 6, wherein TTI1 is shorter than 1 ms and N1 is greater than 60, and/or, wherein N1 and N2 are dependent on a time division duplex, TDD, uplink/downlink subframe configuration of the first cell.

10. The wireless device of any of Claims 6-9, wherein the uplink feedback signals include hybrid automatic repeat request, HARQ acknowledgment, ACK, and negative acknowledgement, NACK, signals.

11. A method for use in a network node of a first cell for configuring a wireless device to acquire system information, SI, of a second cell, the first cell operable to use two or more transmission time intervals, TTIs, the method comprising:

configuring (1162) the wireless device to acquire SI of the second cell during a time period, T0;
determining (1164) a TTI length used for wireless communication with the wireless device in the first cell;
transmitting (1166) a continuous allocation of downlink data to the wireless device during time T0;
when the determined TTI length equals a first TTI value, TTI1, receiving (1168) a first minimum number, N1, of uplink feedback signals from the wireless device during T0; and
when the determined TTI length equals a second TTI value, TTI2, receiving (1168) a second minimum number, N2 of uplink feedback signals from the wireless device during T0;
wherein TTI1 is a shorter duration than TTI2 and N1 is greater than N2.

12. The method of Claim 11, wherein determining (1164) the TTI length comprises determining one of an uplink TTI length used in the first cell and a downlink TTI length used in the first cell, and/or, further comprising, when the network node does not receive N1 or N2 uplink feedback signals during T0, increasing T0.

13. The method of Claim 11, wherein TTI1 is shorter than 1 ms and N1 is greater than 60, and/or,
wherein N1 and N2 are dependent on a time division duplex, TDD, uplink/downlink subframe configuration of the first cell.

14. A network node (120) of a first cell (115) capable of configuring a wireless device (110) to acquire system information, SI, of a second cell (115), the first cell operable to use two or more transmission time intervals, TTIs, the network node comprising processing circuitry (1220) operable to:

configure the wireless device to acquire SI of the second cell during a time period, T0;
determine a TTI length used for wireless communication with the wireless device in the first cell;
transmit a continuous allocation of downlink data to the wireless device during time T0;
when the determined TTI length equals a first TTI value, TTI1, receive a first minimum number, N1, of uplink feedback signals from the wireless device during T0; and
when the determined TTI length equals a second TTI value, TTI2, receive a second minimum number, N2 of uplink feedback signals from the wireless device during T0;
wherein TTI1 is a shorter duration than TTI2 and N1 is greater than N2.

15. The network node of Claim 14, wherein the processor is operable to determine the TTI length by determining one of an uplink TTI length used in the first cell and a downlink TTI length used in the first cell, and/or, the processor further operable to, when the network node does not receive N1 or N2 uplink feedback signals during T0, increase T0.

16. The network node of Claim 14, wherein TTI1 is shorter than 1 ms and N1 is greater than 60, and/or, wherein N1 and N2 are dependent on a time division duplex, TDD uplink/downlink subframe configuration of the first cell.

17. The network node of any of Claims 14-16, wherein the uplink feedback signals include hybrid automatic repeat request, HARQ, acknowledgment, ACK and negative acknowledgement, NACK, signals.

**Patentansprüche**

1. Verfahren zur Verwendung in einer drahtlosen Vorrichtung in Verbindung mit einer ersten Zelle zum Erheben von Systeminformationen, SI, einer zweiten Zelle, wobei die erste Zelle betreibbar ist zum Verwenden von zwei oder mehr Übertragungszeitintervallen, TTIs, das Verfahren umfassend:

Erhalten (812) einer Anforderung zum Erheben von SI der zweiten Zelle;
Erhalten (814) der SI der zweiten Zelle während eines Zeitraums, T0;
Bestimmen (816) einer TTI-Länge, die zur drahtlosen Kommunikation mit der drahtlosen Vorrichtung in der ersten Zelle verwendet wird;
als Reaktion auf das Empfangen (818) von Downlink-Daten von der ersten Zelle während der Zeit T0:

wenn die bestimmte TTI-Länge gleich einem ersten TTI-Wert, TTI1, ist, Übertragen (820) einer ersten Mindestanzahl, N1, von Uplink-Rückkopplungssignalen im Uplink der ersten Zelle während T0; und
wenn die bestimmte TTI-Länge gleich einem zweiten TTI-Wert, TTI2, ist, Übertragen (820) einer zweiten Mindestanzahl, N2, von Uplink-Rückkopplungssignalen in dem Uplink der ersten Zelle während T0;
wobei TTI1 eine kürzere Dauer als TTI2 ist und N1 größer als N2 ist.

2. Verfahren nach Anspruch 1, wobei das Bestimmen (816) der TTI-Länge das Bestimmen einer Uplink-TTI-Länge, die in der ersten Zelle verwendet wird, und einer Downlink-TTI-Länge, die in der ersten Zelle verwendet wird, umfasst.

3. Verfahren nach einem der Ansprüche 1 bis 2, wobei das Erhalten (814) der SI der zweiten Zelle das Messen von Signalen in einer Anzahl von Messlücken einschließt, und das Verfahren ferner umfasst:

wenn die drahtlose Vorrichtung nicht in der Lage ist, N1- oder N2-Uplink-Rückkopplungssignale während T0 zu übertragen, Reduzieren der Anzahl von Messlücken oder Erhöhen von T0, oder wobei das Erhalten (814) der SI der zweiten Zelle das Messen von Signalen in einer Anzahl von Messlücken einschließt, und das Verfahren ferner umfasst:
wenn die drahtlose Vorrichtung nicht in der Lage ist, N1- oder N2-Uplink-Rückkopplungssignale während T0 zu übertragen, Reduzieren der Anzahl von Messlücken oder Erhöhen von T0, und wobei Messlücken autonome Lücken umfassen, die durch die drahtlose Vorrichtung in mindestens der ersten Zelle während der Zeit T0 erzeugt werden.

4. Verfahren nach Anspruch 1, wobei TTI1 kürzer als 1 ms ist und N1 größer als 60 ist und/oder wobei N1 und N2 von einer Zeitduplex-Uplink/Downlink-Unterrahmen-Konfiguration (TDD-Zeitduplex-Uplink/Downlink-Unterrahmen-Konfiguration) der ersten Zelle abhängen.

5. Verfahren nach einem der Ansprüche 1 bis 4, wobei die Uplink-Rückkopplungssignale Signale in Form von Hybrid Automatic Repeat Request-Bestätigung, HARQ-ACK, und negativer Bestätigung, NACK, einschließen.

6. Drahtlose Vorrichtung (110) in Verbindung mit einer ersten Zelle (115) zum Erheben von Systeminformationen, SI, einer zweiten Zelle (115), wobei die erste Zelle betreibbar ist zum Verwenden von zwei oder mehr Übertragungszeitintervallen, TTIs, wobei die drahtlose Vorrichtung eine Verarbeitungsschaltlogik (1120) umfasst, die betreibbar ist zum:

Erhalten einer Anforderung zum Erheben von SI der zweiten Zelle; Erhalten der SI der zweiten Zelle während eines Zeitraums, T0; Bestimmen einer TTI-Länge, die zur drahtlosen Kommunikation mit der drahtlosen Vorrichtung in der ersten Zelle verwendet wird;
als Reaktion auf das Empfangen von Downlink-Daten von der ersten Zelle während der Zeit T0:

wenn die bestimmte TTI-Länge gleich einem ersten TTI-Wert, TTI1, ist, Übertragen einer ersten Mindestanzahl, N1, von Uplink-Rückkopplungssignalen in dem Uplink der ersten Zelle während T0; und
wenn die bestimmte TTI-Länge gleich einem zweiten TTI-Wert, TTI2, ist, Übertragen einer zweiten Mindestanzahl, N2, von Uplink-Rückkopplungssignalen in dem Uplink der ersten Zelle während T0; wobei TTI1 eine kürzere Dauer als TTI2 ist und N1 größer als N2 ist.

7. Drahtlose Vorrichtung nach Anspruch 6, wobei die Verarbeitungsschaltlogik betreibbar ist zum Bestimmen der TTI-Länge durch Bestimmen einer Uplink-TTI-Länge, die in der ersten Zelle verwendet wird, oder einer Downlink-TTI-Länge, die in der ersten Zelle verwendet wird.

8. Drahtlose Vorrichtung nach einem der Ansprüche 6 bis 7, wobei die Verarbeitungsschaltlogik betreibbar ist zum Erhalten der SI der zweiten Zelle durch Messen von Signalen in einer Anzahl von Messlücken, und die Verarbeitungsschaltung ferner betreibbar ist zum:
wenn die drahtlose Vorrichtung nicht in der Lage ist, N1- oder N2-Uplink-Rückkopplungssignale während T0 zu übertragen, Reduzieren der Anzahl von Messlücken oder Erhöhen von T0, oder wobei die Verarbeitungsschaltlogik betreibbar ist zum Erhalten der SI der zweiten Zelle durch Messen von Signalen in einer Anzahl von Messlücken, und die Verarbeitungsschaltlogik ferner betreibbar ist zum:
wenn die drahtlose Vorrichtung nicht in der Lage ist, N1- oder N2-Uplink-Rückkopplungssignale während T0 zu übertragen, Reduzieren der Anzahl von Messlücken oder Erhöhen von T0, und wobei Messlücken autonome Lücken umfassen, die durch die drahtlose Vorrichtung in mindestens der ersten Zelle während der Zeit T0 erzeugt werden.

9. Drahtlose Vorrichtung nach Anspruch 6, wobei TTI1 kürzer als 1 ms ist und N1 größer als 60 ist und/oder wobei N1 und N2 von einer Zeitduplex-Uplink/Downlink-Unterrahmen-Konfiguration, TDD-Zeitduplex-Uplink/Downlink-Unterrahmen-Konfiguration, der ersten Zelle abhängen.

10. Verfahren nach einem der Ansprüche 6 bis 9, wobei die Uplink-Rückkopplungssignale Signale in Form von Hybrid Automatic Repeat Request-Bestätigung, HARQ-ACK, und negativer Bestätigung, NACK, einschließen.

11. Verfahren zur Verwendung in einem Netzknoten einer ersten Zelle zum Konfigurieren einer drahtlosen Vorrichtung zum Erheben von Systeminformationen, SI, einer zweiten Zelle, wobei die erste Zelle betreibbar ist zum Verwenden von zwei oder mehr Übertragungszeitintervallen, TTIs, das Verfahren umfassend:

Konfigurieren (1162) der drahtlosen Vorrichtung zum Erheben von SI der zweiten Zelle während eines Zeitraums, T0;
Bestimmen (1164) einer TTI-Länge, die zur drahtlosen Kommunikation mit der drahtlosen Vorrichtung in der ersten Zelle verwendet wird;
Übertragen (1166) einer kontinuierlichen Zuordnung von Downlink-Daten an die drahtlose Vorrichtung während der Zeit T0;
wenn die bestimmte TTI-Länge gleich einem ersten TTI-Wert, TTI1, ist, Empfangen (1168) einer ersten Mindestanzahl, N1, von Uplink-Rückkopplungssignalen von der drahtlosen Vorrichtung während T0; und
wenn die bestimmte TTI-Länge gleich einem zweiten TTI-Wert, TTI2, ist, Empfangen (1168) einer zweiten Mindestanzahl, N2, von Uplink-Rückkopplungssignalen von der drahtlosen Vorrichtung während T0; wobei TTI1 eine kürzere Dauer als TTI2 ist und N1 größer als N2 ist.

12. Verfahren nach Anspruch 11, wobei das Bestimmen (1164) der TTI-Länge das Bestimmen einer Uplink-TTI-Länge, die in der ersten Zelle verwendet wird, und einer Downlink-TTI-Länge, die in der ersten Zelle verwendet wird, umfasst und/oder ferner umfassend, wenn der Netzknoten N1- oder N2-Uplink-Rückkopplungssignale während T0 nicht empfängt, Erhöhen von T0.

13. Verfahren nach Anspruch 11, wobei TTI1 kürzer als 1 ms ist und N1 größer als 60 ist, und/oder wobei N1 und N2 von einer Zeitduplex-Uplink/Downlink-Unterrahmen-Konfiguration, TDD-Uplink/Downlink-Unterrahmen-Konfiguration, der ersten Zelle abhängt.

14. Netzknoten (120) einer ersten Zelle (115), der in der Lage ist, eine drahtlose Vorrichtung (110) zu konfigurieren zum Erheben von Systeminformationen, SI, einer zweiten Zelle (115), wobei die erste Zelle betreibbar ist zum Verwenden von zwei oder mehr Übertragungszeitintervallen, TTIs, wobei der Netzknoten eine Verarbeitungsschaltlogik (1220) umfasst, die betreibbar ist zum:

Konfigurieren der drahtlosen Vorrichtung zum Erheben von SI der zweiten Zelle während eines Zeitraums, T0;
Bestimmen einer TTI-Länge, die zur drahtlosen Kommunikation mit der drahtlosen Vorrichtung in der ersten Zelle verwendet wird;
Übertragen einer kontinuierlichen Zuordnung von Downlink-Daten an die drahtlose Vorrichtung während der Zeit T0;
wenn die bestimmte TTI-Länge gleich einem ersten TTI-Wert, TTI1, ist, Empfangen einer ersten Mindestanzahl, N1, von Uplink-Rückkopplungssignalen von der drahtlosen Vorrichtung während T0; und
wenn die bestimmte TTI-Länge gleich einem zweiten TTI-Wert, TTI2, ist, Empfangen einer zweiten Mindestanzahl, N2, von Uplink-Rückkopplungssignalen von der drahtlosen Vorrichtung während T0;
wobei TTI1 eine kürzere Dauer als TTI2 ist und N1 größer als N2 ist.

15. Netzknoten nach Anspruch 14, wobei der Prozessor betreibbar ist zum Bestimmen der TTI-Länge durch Bestimmen einer von einer Uplink-TTI-Länge, die in der ersten Zelle verwendet wird, und einer Downlink-TTI-Länge, die in der ersten Zelle verwendet wird, und/oder wobei der Prozessor ferner betreibbar ist zum Erhöhen von T0, wenn der Netzknoten während T0 keine N1- oder N2-Uplink-Rückkopplungssignale empfängt.

16. Netzknoten nach Anspruch 14, wobei TTI1 kürzer als 1 ms ist und N1 größer als 60 ist, und/oder wobei N1 und N2 von einer Zeitduplex-Uplink/Downlink-Unterrahmen-Konfiguration, TDD-Uplink/Downlink-Unterrahmen-Konfiguration, der ersten Zelle abhängt.

17. Netzknoten nach einem der Ansprüche 14 bis 16, wobei die Uplink-Rückkopplungssignale Signale in Form von Hybrid Automatic Repeat Request-Bestätigung, HARQ-ACK, und negativer Bestätigung, NACK, einschließen.

## Revendications

1. Procédé pour utilisation dans un dispositif sans fil en communication avec une première cellule pour acquérir des informations système, SI, d'une deuxième cellule, la première cellule opérationnelle pour utiliser deux intervalles de temps de transmission, TTI, ou plus, le procédé comprenant :

l'obtention (812) d'une demande pour acquérir des SI de la deuxième cellule ;
l'obtention (814) des SI de la deuxième cellule pendant une période de temps, T0 ;
la détermination (816) d'une longueur de TTI utilisée pour une communication sans fil avec le dispositif sans fil dans la première cellule ;
en réponse à la réception (818) de données de liaison descendante depuis la première cellule pendant le temps T0 :

lorsque la longueur de TTI déterminée est égale à une première valeur de TTI, TTI1, la transmission (820) d'un premier nombre minimal, N1, de signaux de rétroaction de liaison montante dans la liaison montante de la première cellule pendant T0 ; et
lorsque la longueur de TTI déterminée est égale à une deuxième valeur de TTI, TTI2, la transmission (820) d'un deuxième nombre minimal, N2, de signaux de rétroaction de liaison montante dans la liaison montante de la première cellule pendant T0 ;

dans lequel TTI1 est une durée plus courte que TTI2 et N1 est supérieur à N2.

2. Procédé selon la revendication 1, dans lequel la détermination (816) de la longueur de TTI comprend la détermination d'une parmi une longueur de TTI de liaison montante utilisée dans la première cellule et une longueur de TTI de liaison descendante utilisée dans la première cellule.

3. Procédé selon l'une quelconque des revendications 1 ou 2, dans lequel l'obtention (814) des SI de la deuxième cellule inclut la mesure de signaux dans un nombre d'espaces de mesure, et le procédé comprend en outre :
lorsque le dispositif sans fil n'est pas apte à transmettre N1 ou N2 signaux de rétroaction de liaison montante pendant T0, la réduction du nombre d'espaces de mesure ou l'augmentation de T0, ou, dans lequel l'obtention (814) des SI de la deuxième cellule inclut la mesure de signaux dans un nombre d'espaces de mesure, et le procédé comprend en outre :
lorsque le dispositif sans fil n'est pas apte à transmettre N1 ou N2 signaux de rétroaction de liaison montante pendant T0, la réduction du nombre d'espaces de mesure ou l'augmentation de T0 et dans lequel des espaces de mesure comprennent des espaces autonomes créés par le dispositif sans fil dans au moins la première cellule pendant le temps T0.

4. Procédé selon la revendication 1, dans lequel TTI1 est plus court que 1 ms et N1 est supérieur à 60, et/ou dans lequel N1 et N2 sont dépendants d'une configuration de sous-trame de liaison montante/liaison descendante de duplexage par répartition temporelle (TDD) de la première cellule.

5. Procédé selon l'une quelconque des revendications 1 à 4, dans lequel les signaux de rétroaction de liaison montante incluent des signaux d'accusé de réception, ACK, et d'accusé de réception négatif, NACK, de demande de répétition automatique hybride, HARQ.

6. Dispositif sans fil (110) en communication avec une première cellule (115) pour acquérir des informations système, SI, d'une deuxième cellule (115), la première cellule opérationnelle pour utiliser deux intervalles de temps de transmission, TTI, ou plus, le dispositif sans fil comprenant un circuit de traitement (1120) opérationnel pour :

obtenir une demande pour acquérir des SI de la deuxième cellule ;
obtenir les SI de la deuxième cellule pendant une période de temps, T0 ;
déterminer une longueur de TTI utilisée pour une communication sans fil avec le dispositif sans fil dans la première cellule ;
en réponse à la réception de données de liaison descendante depuis la première cellule pendant le temps T0 :

lorsque la longueur de TTI déterminée est égale à une première valeur de TTI, TTI1, transmettre un premier nombre minimal, N1, de signaux de rétroaction de liaison montante dans la liaison montante de la première cellule pendant T0 ; et
lorsque la longueur de TTI déterminée est égale à une deuxième valeur de TTI, TTI2, transmettre un deuxième nombre minimal, N2, de signaux de rétroaction de liaison montante dans la liaison montante de la première cellule pendant T0 ;
dans lequel TTI1 est une durée plus courte que TTI2 et N1 est supérieur à N2.

7. Dispositif sans fil selon la revendication 6, dans lequel le circuit de traitement est opérationnel pour déterminer la longueur de TTI en déterminant l'une parmi une longueur de TTI de liaison montante utilisée dans la première cellule et une longueur de TTI de liaison descendante utilisée dans la première cellule.

8. Dispositif sans fil selon l'une quelconque des revendications 6 ou 7, dans lequel le circuit de traitement est opérationnel pour obtenir les SI de la deuxième cellule en mesurant des signaux dans un nombre d'espaces de mesure, et le circuit de traitement est en outre opérationnel pour :
lorsque le dispositif sans fil n'est pas apte à transmettre N1 ou N2 signaux de rétroaction de liaison montante pendant T0, réduire le nombre d'espaces de mesure ou augmenter T0, ou, dans lequel le circuit de traitement est opérationnel pour obtenir les SI de la deuxième cellule en mesurant des signaux dans un nombre d'espaces de mesure, et le circuit de traitement est en outre opérationnel pour :
lorsque le dispositif sans fil n'est pas apte à transmettre N1 ou N2 signaux de rétroaction de liaison montante pendant T0, réduire le nombre d'espaces de mesure ou augmenter T0 et dans lequel des espaces de mesure comprennent des espaces autonomes créés par le dispositif sans fil dans au moins la première cellule pendant le temps T0.

9. Dispositif sans fil selon la revendication 6, dans lequel TTI1 est plus court que 1 ms et N1 est supérieur à 60, et/ou dans lequel N1 et N2 sont dépendants d'une configuration de sous-trame de liaison montante/liaison descendante de duplexage par répartition temporelle, TDD de la première cellule.

10. Dispositif sans fil selon l'une quelconque des revendications 6 à 9, dans lequel les signaux de rétroaction de liaison montante incluent des signaux d'accusé de réception, ACK, et d'accusé de réception négatif, NACK, de demande de répétition automatique hybride, HARQ.

11. Procédé pour utilisation dans un nœud de réseau d'une première cellule pour configurer un dispositif sans fil pour acquérir des informations système, SI, d'une deuxième cellule, la première cellule opérationnelle pour utiliser deux intervalles de temps de transmission, TTI, ou plus, le procédé comprenant :

la configuration (1162) du dispositif sans fil pour acquérir des SI de la deuxième cellule pendant une période de temps, T0 ;
la détermination (1164) d'une longueur de TTI utilisée pour une communication sans fil avec le dispositif sans fil dans la première cellule ;
la transmission (1166) d'une allocation continue de données de liaison descendante au dispositif sans fil pendant le temps T0 ;
lorsque la longueur de TTI déterminée est égale à une première valeur de TTI, TTI1, la réception (1168) d'un premier nombre minimal, N1, de signaux de rétroaction de liaison montante depuis le dispositif sans fil pendant T0 ; et
lorsque la longueur de TTI déterminée est égale à une deuxième valeur de TTI, TTI2, la réception (1168) d'un deuxième nombre minimal, N2 de signaux de rétroaction de liaison montante depuis le dispositif sans fil pendant T0 ;
dans lequel TTI1 est une durée plus courte que TTI2 et N1 est supérieur à N2.

12. Procédé selon la revendication 11, dans lequel la détermination (1164) de la longueur de TTI comprend la détermination d'une parmi une longueur de TTI de liaison montante utilisée dans la première cellule et une longueur de TTI de liaison descendante utilisée dans la première cellule, et/ou, comprenant en outre, lorsque le nœud de réseau ne reçoit pas N1 ou N2 signaux de rétroaction de liaison montante pendant T0, l'augmentation de T0.

13. Procédé selon la revendication 11, dans lequel TTI1 est plus court que 1 ms et N1 est supérieur à 60, et/ou, dans lequel N1 et N2 sont dépendants d'une configuration de sous-trame de liaison montante/liaison descendante de duplexage par répartition temporelle, TDD, de la première cellule.

14. Nœud de réseau (120) d'une première cellule (115) capable de configurer un dispositif sans fil (110) pour acquérir des informations système, SI, d'une deuxième cellule (115), la première cellule opérationnelle pour utiliser deux intervalles de temps de transmission, TTI, ou plus, le nœud de réseau comprenant un circuit de traitement (1220) opérationnel pour :

configurer le dispositif sans fil pour acquérir des SI de la deuxième cellule pendant une période de temps, T0 ;
déterminer une longueur de TTI utilisée pour une communication sans fil avec le dispositif sans fil dans la première cellule ;
transmettre une allocation continue de données de liaison descendante au dispositif sans fil pendant le temps T0 ;
lorsque la longueur de TTI déterminée est égale à une première valeur de TTI, TTI1, recevoir un premier nombre minimal, N1, de signaux de rétroaction de liaison montante depuis le dispositif sans fil pendant T0 ; et
lorsque la longueur de TTI déterminée est égale à une deuxième valeur de TTI, TTI2, recevoir un deuxième nombre minimal, N2 de signaux de rétroaction de liaison montante depuis le dispositif sans fil pendant T0 ;
dans lequel TTI1 est une durée plus courte que TTI2 et N1 est supérieur à N2.

15. Nœud de réseau selon la revendication 14, dans lequel le processeur est opérationnel pour déterminer la longueur de TTI en déterminant l'une parmi une longueur de TTI de liaison montante utilisée dans la première cellule et une longueur de TTI de liaison descendante utilisée dans la première cellule, et/ou, le processeur opérationnel en outre, lorsque le nœud de réseau ne reçoit pas N1 ou N2 signaux de rétroaction de liaison montante pendant T0, pour augmenter T0.

16. Nœud de réseau selon la revendication 14, dans lequel TTI1 est plus court que 1 ms et N1 est supérieur à 60, et/ou, dans lequel N1 et N2 sont dépendants d'une configuration de sous-trame de liaison montante/liaison descendante de duplexage par répartition temporelle, TDD, de la première cellule.

17. Nœud de réseau selon l'une quelconque des revendications 14 à 16, dans lequel les signaux de rétroaction de liaison montante incluent des signaux d'accusé de réception, ACK, et d'accusé de réception négatif, NACK, de demande de répétition automatique hybride, HARQ.

Fig. 1

Sub-frame ($T_{subframe}$ = 1 ms)

#0    #1 · · ·                                                                        #9

Radio frame ($T_{frame}$ = 10 ms)

10

Fig. 2

Fig. 3

Fig. 4

Fig. 5

AGC/AFC

MIB

|←5 ms→|

←————————40 ms TTI————————→

B1    B2    B3    B4

10    10    10    10

|←4 ms→|

SIB1

←————————————————80 ms TTI————————————————→

RVa        RVb        RVc        RVd

10  | 10 | 10  | 10 | 10  | 10 | 10  | 10

|←4 ms→|

Target cell subframe to receive

Gap created in source cell

Fig. 6

Fig. 7

800

| 812 - obtain a request to acquire SI of a second cell |
|---|

| 814 - obtain the SI of the second cell during a time period (T0) |
|---|

| 816 - determine a TTI length used for wireless communication with the wireless device in a first cell |
|---|

| 818 - receive downlink data from the first cell during time T0 |
|---|

| 820 - transmit a minimum number N of uplink feedback signals during time T0 |
|---|

Fig. 8

Fig. 9

EP 3 535 892 B1

Fig. 10

EP 3 535 892 B1

1100

EP 3 535 892 B1

| |
|---|
| 1162 - configure a wireless device to acquire SI of a second cell during a time period (T0) |

$\downarrow$

| |
|---|
| 1164 - determine a TTI length used for wireless communication with the wireless device in a first cell |

$\downarrow$

| |
|---|
| 1166 - transmit a continuous transmission of downlink data to the wireless device during time T0 |

$\downarrow$

| |
|---|
| 1168 - receive a minimum number N of uplink feedback signals during time T0 |

Fig. 11

EP 3 535 892 B1

110

Transceiver — 1210

Processing
Circuitry — 1220

Memory — 1230

Power
Source — 1240

Fig. 12A

| Obtaining Module 1250 | Determining Module 1252 |
|---|---|
| Receiving Module 1254 | Transmitting Module 1256 |

FIG. 12B

120

Processing
Circuitry
1320

Network
Interface
1340

Transceiver
1310

Memory
1330

Fig. 13A

EP 3 535 892 B1

Configuring
Module
1350

Determining
Module
1352

Receiving
Module
1356

Transmitting
Module
1354

FIG. 13B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016262137 A

- WO 2013172757 A